# EUROPEAN PATENT SPECIFICATION

(11) **EP 3 051 116 B1**
(45) Date of publication and mention of the grant of the patent: **11.03.2020**
(21) Application number: 14850083.8
(22) Date of filing: 19.09.2014
(51) Int. Cl.: F02M 61/18, F02M 61/16, F16B 2/22, F16B 5/07, F16B 21/18

(54) **ATTACHMENT STRUCTURE OF NOZZLE PLATE FOR FUEL INJECTION DEVICE**
BEFESTIGUNGSSTRUKTUR EINER DÜSENPLATTE FÜR EINE KRAFTSTOFFEINSPRITZVORRICHTUNG
STRUCTURE DE FIXATION D'UNE PLAQUE DE BUSES POUR UN DISPOSITIF D'INJECTION DE CARBURANT

(30) Priority: 26.09.2013 JP 2013200198; 30.09.2013 JP 2013203184; 04.10.2013 JP 2013209086; 15.10.2013 JP 2013214995
(43) Date of publication of application: 03.08.2016
(73) Proprietor: Enplas Corporation, Kawaguchi-shi Saitama 332-0034 (JP)
(72) Inventor: NOGUCHI, Koji, Kawaguchi-shi Saitama 332-0034 (JP)
(74) Representative: Prinz & Partner mbB
(86) International application number: PCT/JP2014/074779
(87) International publication number: WO 2015/046029

(56) References cited:
- JP-A- H0 882 271
- JP-A- H03 160 151
- JP-A- 2002 522 732
- JP-A- 2010 242 548
- JP-U- H 057 956
- JP-U- H0 341 318
- US-A- 5 193 747
- US-A1- 2003 085 309

## Description

### Technical Field

The present invention relates to an attachment structure containing a fuel injection device nozzle plate (abbreviated below as a nozzle plate) used to atomize and inject fuel flowing from the fuel injection port of a fuel injection device.

### Background Art

An internal combustion (abbreviated below as an engine) of an automobile or the like mixes fuel injected from a fuel injection device and air introduced via an intake air pipe to generate a combustible gas mixture and burns the combustible gas mixture in the cylinder. It is known that the mixture state of fuel injected from the fuel injection device and air significantly affects the performance of this type of engine and, in particular, the atomization of fuel injected from the fuel injection device is an important factor governing the performance of the engine.

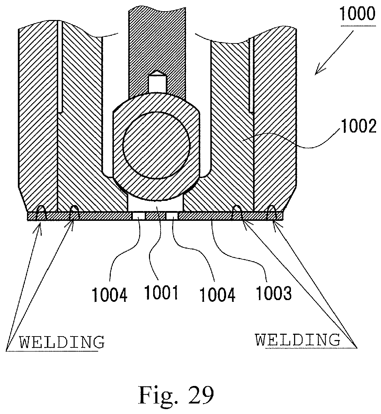

Accordingly, as illustrated in Fig. 29, a conventional fuel injection device 1000 promotes the atomization of fuel by welding a nozzle plate 1003 of metal to a valve body 1002 of metal having a fuel injection port 1001 and injecting the fuel injected from the fuel injection port 1001 into an intake air pipe via nozzle holes 1004 formed in the nozzle plate 1003 (see JP-A-11-270438and JP-A-2011-144731).

In US5193747 a nozzle plate containing injection orifices is welded to the nozzle of a fuel injection valve. The resulting structure is provided with a protective cap, made of plastic material, and which is a snap fit thanks to a flange that is received in a peripheral circumferential groove on valve. The cap includes features that provide a capillary effect to draw residual fuel, especially low volatility components, away from the injection orifices.

Similarly, in JP H057956U a nozzle plate containing injection orifices is welded to the nozzle of a fuel injection valve. The resulting structure is provided with a protective cap, made of plastic material, which is also secured to the valve body with a flange received peripheral circumferential groove on valve. The cap includes an annular metallic insert which is held in contact with the nozzle plate. The metallic ring reduces the risk of ice forming and blocking injection orifices once the engine fed by the injector is turned off.

In US2003/0085309 a nozzle plate containing injection orifices is welded to the nozzle of a fuel injection valve. The resulting structure is provided with a protective cap, made of plastic material, which is has an annular groove which receives the projecting outer periphery of the nozzle plate, thereby securing the cap to the valve body. Various arrangements of features on the cap and on the periphery of the nozzle plate are used to ensure that correct rotational registration is maintained between the cap and the nozzle.

Another example of a nozzle plate made of plastic and an interlocking feature is given in the document DE3808396.

### Summary of Invention

### Technical Problem

However, the conventional fuel injection device 1000 needs to use a masking jig for welding to prevent welding spatter from entering the nozzle holes 1004 of the nozzle plate 1003 and blocking the nozzle holes 1004, so efficient welding is difficult. As a result, the manufacturing man-hours of the conventional fuel injection device 1000 increases, making it difficult to reduce the manufacturing cost.

An object of the invention is to provide the attachment structure of a fuel injection device nozzle plate for enabling reduction in the manufacturing man-hours and manufacturing cost of a fuel injection device.

### Solution to Problem

The invention relates to the attachment structure of fuel injection device nozzle plates 3, 103, and 203 having nozzle holes 7, 107, and 207 for atomizing and injecting fuel flowing from fuel injection ports 4, 104, and 204 of fuel injection devices 1, 101, and 201. In the invention, the fuel injection device nozzle plates 3, 103, and 203 include cylindrical fitting parts 12, 112, and 212 to be fitted onto front end sides of valve bodies 5, 105, and 205 of metal having the fuel injection ports 4, 104, 204 and bottom wall parts 14, 114, and 214 formed so as to block one end sides of the cylindrical fitting parts 12, 112, and 212, the bottom wall parts abutting against front end surfaces 13, 113, and 213 of the valve bodies 5, 105, and 205 and having the nozzle holes 7, 107, and 207. In addition, the cylindrical fitting parts 12, 112, and 212 and the bottom wall parts 14, 114, and 214 of the fuel injection device nozzle plates 3, 103, and 203 are made of synthetic resin and formed integrally. In addition, the valve bodies 5, 105, 205 are provided with outer periphery around which annular interlocking grooves 108 and 208 or interlocking projections 8 and 240 are formed. In addition, arm parts 10, 110, 210, and 241 of synthetic resin to be fitted into the interlocking grooves 108 and 208 or the interlocking projections 8 and 240 are formed integrally with the cylindrical fitting parts 12, 112, and 212 and the cylindrical fitting parts 12, 112, and 212 are fixed to the valve bodies 5, 105, and 205 when the arm parts 10, 110, 210, and 241 engage with the interlocking grooves 108 and 208 or the interlocking projections 8 and 240 in a state in which the bottom wall parts 14, 114, and 214 abut against the front end surfaces 13, 113, and 213 of the valve bodies 5, 105, and 205.

### Advantageous Effects of Invention

In the attachment structure of a fuel injection device nozzle plate according to the invention, since the nozzle plate is fixed to the front end side of a valve body only by fitting the cylindrical fitting part of the nozzle plate onto the front end side of the valve body and engaging the arm part of the nozzle plate with the interlocking groove or the interlocking projection of the valve body, the manufacturing man-hours and manufacturing cost of the fuel injection device can be reduced as compared with a conventional example in which a nozzle plate of metal is fixed to the front end of a valve body of metal by welding.

### Brief Description of Drawings

[Fig. 1] Fig. 1 schematically illustrates the use state of a fuel injection device 1.

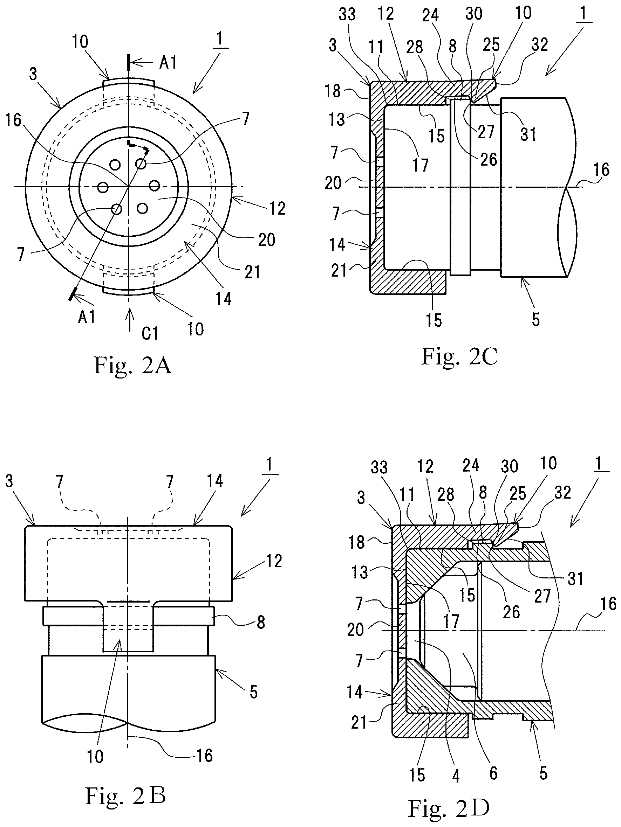

[Fig. 2] Fig. 2 illustrates an attachment structure of a nozzle plate according to a first embodiment of the invention. Fig. 2A is a front view illustrating the front end side of a fuel injection device, Fig. 2B is a side view illustrating the front end side of the fuel injection device seen from the direction of arrow C1 in Fig. 2A, Fig. 2C is a cross sectional view illustrating the front end side of the fuel injection device taken along line A1-A1 in the nozzle plate in Fig. 2A, and Fig. 2D is a cross sectional view illustrating the front end side of the fuel injection device taken along line A1-A1 in the entire fuel injection device in Fig. 2A.
[Fig. 3] Fig. 3A is a front view illustrating the nozzle plate, Fig. 3B is a side view illustrating the nozzle plate seen from the direction of arrow C2 in Fig. 3A, and Fig. 3C is a cross sectional view illustrating the nozzle plate taken along line A2-A2 in Fig. 3A.
[Fig. 4] Fig. 4A is a front view illustrating a valve body, Fig. 4B is a side view illustrating the front end side of the valve body, and Fig. 4C is a vertical cross sectional view illustrating the front end side of the valve body taken along line A3-A3 in Fig. 4A.
[Fig. 5] Fig. 5 illustrates the attachment structure of the nozzle plate. Fig. 5A is an enlarged view illustrating a part of Fig. 2C, Fig. 5B illustrates a first state in which the difference in thermal expansion between the nozzle plate and the valve body and the manufacturing error of the nozzle plate and the valve body have been absorbed, and Fig. 5C illustrates a second state in which the difference in thermal expansion between the nozzle plate and the valve body and the manufacturing error of the nozzle plate and the valve body have been absorbed.
[Fig. 6] Fig. 6 illustrates an attachment structure of a nozzle plate according to a second embodiment of the invention. Fig. 6A is a front view illustrating the front end side of the fuel injection device, Fig. 6B is a side view illustrating the front end side of the fuel injection device seen from the direction of arrow C3 in Fig. 6A, and Fig. 6C is a cross sectional view illustrating the front end side of the fuel injection device taken along line A4-A4 in the nozzle plate in Fig. 6A.
[Fig. 7] Fig. 7A is a front view illustrating the nozzle plate, Fig. 7B is a side view illustrating the nozzle plate seen from the direction of arrow C4 in Fig. 7A, and Fig. 7C is a cross sectional view illustrating the nozzle plate taken along line A5-A5 in Fig. 7A.
[Fig. 8] Fig. 8A is a front view illustrating the valve body and Fig. 8B a side view illustrating the front end side of the valve body.
[Fig. 9] Fig. 9 illustrates the attachment structure of the nozzle plate. Fig. 9A is an enlarged view illustrating a part of Fig. 6C, Fig. 9B illustrates the first state in which the difference in thermal expansion between the nozzle plate and the valve body and the manufacturing error of the nozzle plate and the valve body have been absorbed, and Fig. 9C illustrates the second state in which the difference in thermal expansion between the nozzle plate and the valve body and the manufacturing error of the nozzle plate and the valve body have been absorbed.
[Fig. 10] Fig. 10 schematically illustrates the use state of a fuel injection device 101.

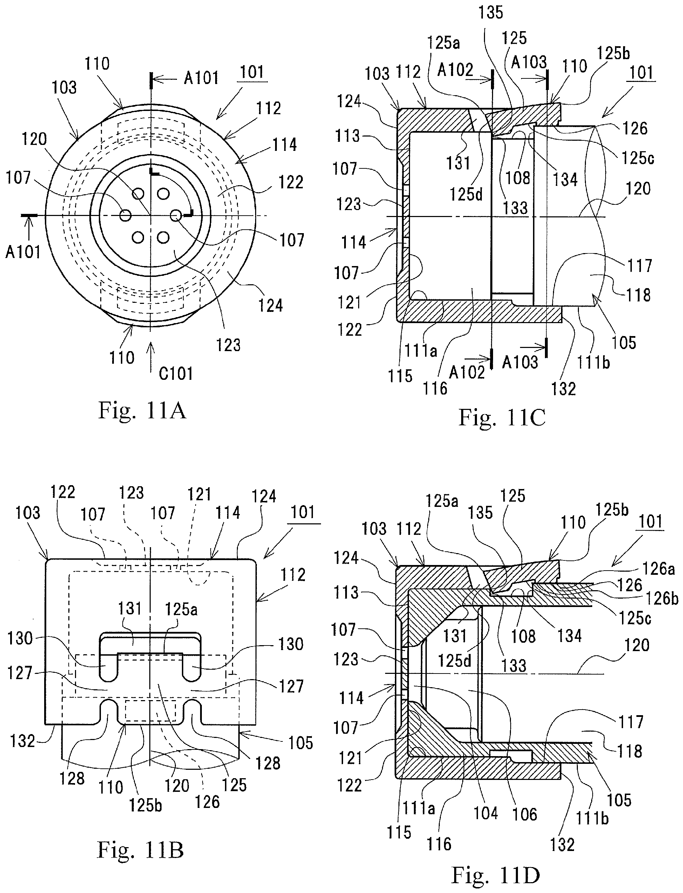

[Fig. 11] Fig. 11 illustrates an attachment structure of a nozzle plate according to a third embodiment of the invention. Fig. 11A is a front view illustrating the front end side of the fuel injection device, Fig. 11B is a side view illustrating the front end side of the fuel injection device seen from the direction of arrow C101 in Fig. 11A, Fig. 11C is a cross sectional view illustrating the front end side of the fuel injection device taken along line A101-A101 in the nozzle plate in Fig. 11A, and Fig. 11D is a cross sectional view illustrating the front end side of the fuel injection device taken along line A101-A101 in the entire fuel injection device in Fig. 11A.
[Fig. 12] Fig. 12A is a cross sectional view taken along line A102-A102 in Fig. 11C and Fig. 12B is a cross sectional view taken along line A103-A103 in Fig. 11C.
[Fig. 13] Fig. 13A is a front view illustrating a nozzle plate according to the third embodiment of the invention, Fig. 13B is a side view illustrating the nozzle plate seen from the direction of arrow C102 in Fig. 13A, and Fig. 13C is a cross sectional view illustrating the nozzle plate taken along line A104-A104 in Fig. 13A.
[Fig. 14] Fig. 14A is a front view illustrating a valve body according to the third embodiment of the invention and Fig. 14B is a side view illustrating the front end side of the valve body.
[Fig. 15] Fig. 15 illustrates an attachment structure of a nozzle plate according to a fourth embodiment of the invention. Fig. 15A is a front view of the front end side of the fuel injection device, Fig. 15B is a side view illustrating the front end side of the fuel injection device seen from the direction of arrow C103 in Fig. 15A, and Fig. 15C is a cross sectional view illustrating the front end side of the fuel injection device taken along line A105-A105 in the nozzle plate in Fig. 15A.
[Fig. 16] Fig. 16A is a cross sectional view taken along line A106-A106 in Fig. 15C and Fig. 16B is a cross sectional view taken along line A107-A107 in Fig. 15C.
[Fig. 17] Fig. 17A is a front view illustrating a valve body according to the fourth embodiment of the invention and Fig. 17B a side view illustrating the front end side of the valve body.
[Fig. 18] Fig. 18 schematically illustrates the use state of a fuel injection device 201.

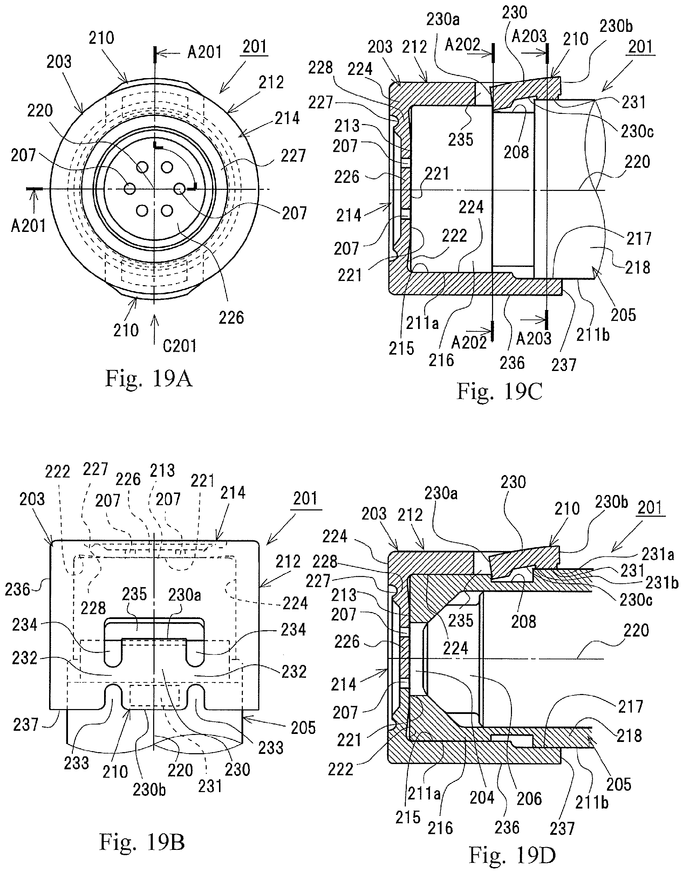

[Fig. 19] Fig. 19 illustrates an attachment structure of a nozzle plate according to a fifth embodiment of the invention. Fig. 19A is a front view of the front end side of the fuel injection device, Fig. 19B is a side view illustrating the front end side of the fuel injection device seen from the direction of arrow C201 in Fig. 19A, Fig. 19C is a cross sectional view illustrating the front end side of the fuel injection device taken along line A201-A201 in the nozzle plate in Fig. 19A, and Fig. 19D is a cross sectional view illustrating the front end side of the fuel injection device taken along line A201-A201 in the entire fuel injection device in Fig. 19A.
[Fig. 20] Fig. 20A is a cross sectional view illustrating the fuel injection device 1 taken along line A202-A202 in Fig. 19C and Fig. 20B is a cross sectional view illustrating the fuel injection device taken along line A203-A203 in Fig. 19C.
[Fig. 21] Fig. 21 illustrates the nozzle plate according to the fifth embodiment of the invention. Fig. 21A is a front view illustrating the nozzle plate, Fig. 21B is a side view illustrating the nozzle plate seen from the direction of arrow C202 in Fig. 21A, and Fig. 21C is a cross sectional view illustrating the nozzle plate taken along line A204-A204 in Fig. 21A.
[Fig. 22] Fig. 22A illustrates a first engagement state of the nozzle plate and the valve body, Fig. 22B illustrates a second engagement state of the nozzle plate and the valve body, and Fig. 22C illustrates a third engagement state of the nozzle plate and the valve body.
[Fig. 23] Fig. 23A is a front view illustrating the valve body according to the fifth embodiment of the invention and Fig. 23B is a side view illustrating the front end side of the valve body illustrated in Fig. 23A.

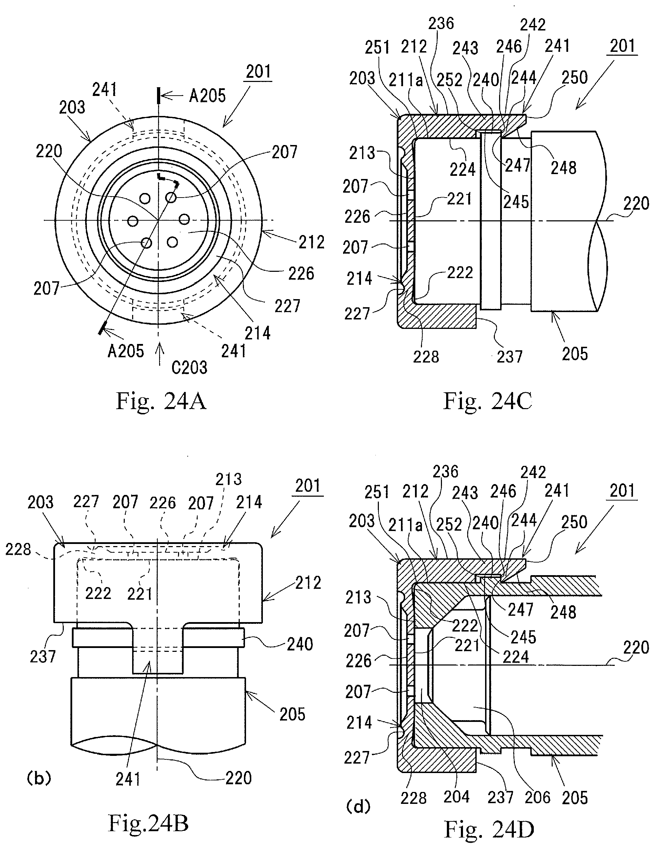

[Fig. 24] Fig. 24 illustrates an attachment structure of a nozzle plate according to a sixth embodiment of the invention. Fig. 24A is a front view illustrating the front end side of the fuel injection device, Fig. 24B is a side view illustrating the front end side of the fuel injection device seen from the direction of arrow C203 in Fig. 24A, and Fig. 24C is a cross sectional view illustrating the front end side of the fuel injection device taken along line A205-A205 in the nozzle plate in Fig. 24A, and Fig. 24D is a cross sectional view illustrating the front end side of the fuel injection device taken along line A205-A205 in the entire fuel injection device in Fig. 24A.
[Fig. 25] Fig. 25 illustrates the nozzle plate according to the sixth embodiment of the invention. Fig. 25A is a front view illustrating the nozzle plate, Fig. 25B is a side view illustrating the nozzle plate seen from the direction of arrow C204 in Fig. 25A, and Fig. 25C is a cross sectional view illustrating the nozzle plate taken along line A206-A206 in Fig. 25A.

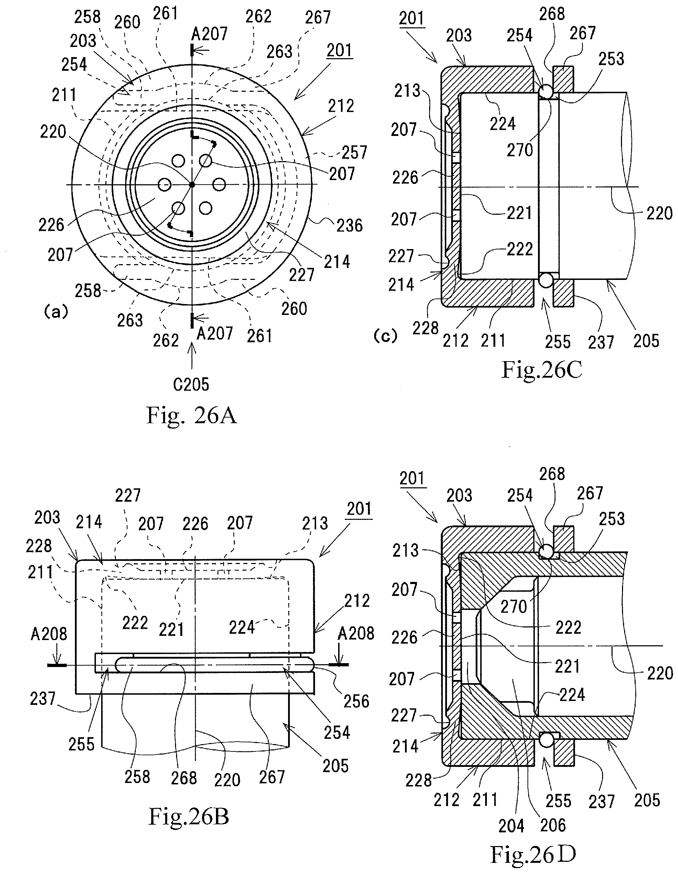

[Fig. 26] Fig. 26 illustrates an attachment structure of a nozzle plate according to a seventh embodiment which, however, is only exemplary and is not part of the invention. Fig. 26A is a front view illustrating the front end side of the fuel injection device, Fig. 26B is a side view illustrating the front end side of the fuel injection device seen from the direction of arrow C205 in Fig. 26A, Fig. 26C is a cross sectional view illustrating the front end side of the fuel injection device taken along line A207-A207 in the nozzle plate in Fig. 26A, and Fig. 26D is a cross sectional view illustrating the front end side of the fuel injection device taken along line A207-A207 in the entire fuel injection device in Fig. 26A.
[Fig. 27] Fig. 27 is a cross sectional view illustrating the fuel injection device taken along line A208-A208 in Fig. 26B.

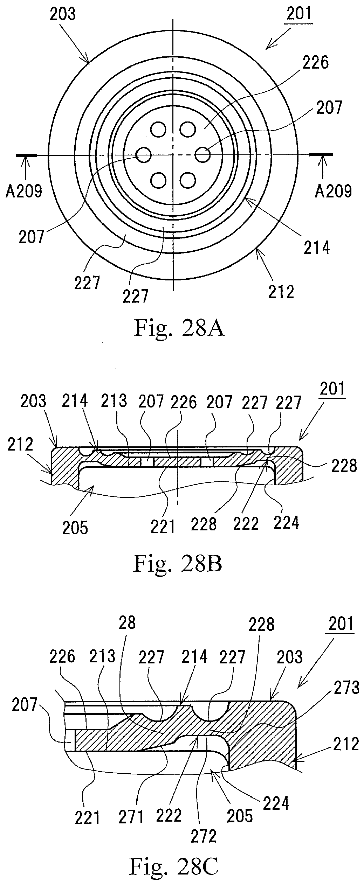

[Fig. 28] Fig. 28 illustrates an attachment structure of a nozzle plate according to an eight embodiment of the invention. Fig. 28A is a front view illustrating the front end side of the fuel injection device, Fig. 28B is a cross sectional view illustrating the front end side of the fuel injection device taken along line A209-A209 in Fig. 28A, and Fig. 28C is an enlarged view illustrating a part of the fuel injection device illustrated in Fig. 28B.
[Fig. 29] Fig. 29 is a cross sectional view of the front end side of a fuel injection device illustrating a conventional attachment structure of a nozzle plate.

### Description of Embodiments

Embodiments of the invention will be described below in detail with reference to the drawings.

### [First embodiment]

### (Fuel injection device)

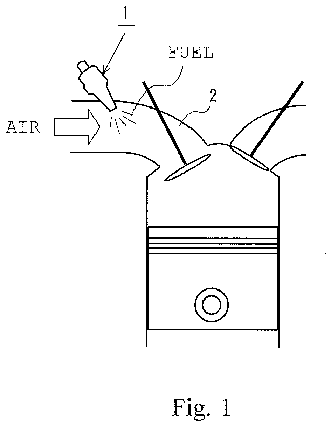

Fig. 1 schematically illustrates the use state of a fuel injection device 1 (see Fig. 2). As illustrated in Fig. 1, the fuel injection device 1 of port injection type is installed at an intermediate point on an intake air pipe 2 of an engine, injects fuel into the intake air pipe 2, mixes air introduced to the intake air pipe 2 and the fuel, and generates a combustible gas mixture.

Fig. 2 illustrates the front end side of the fuel injection device 1 to which a fuel injection device nozzle plate 3 (abbreviated below as the nozzle plate) has been attached. Fig. 2A is a front view illustrating the front end side of the fuel injection device 1 and Fig. 2B is a side view illustrating the front end side of the fuel injection device 1 seen from the direction of arrow C1 in Fig. 2A. In addition, Fig. 2C is a cross sectional view illustrating the front end side of the fuel injection device 1 in a plane of the nozzle plate 3 including line A1-A1 in Fig. 2A. In addition, Fig. 2D is a cross sectional view illustrating the front end side of the fuel injection device 1 in a plane of the entire fuel injection device 1 including line A1-A1 in Fig. 2A.

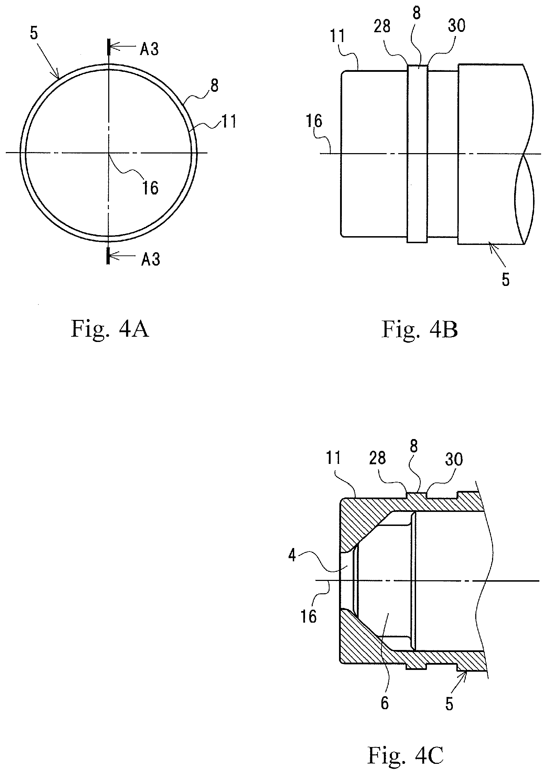

As illustrated in Fig. 2, in the fuel injection device 1, the nozzle plate 3 of synthetic resin is attached to the front end side of a valve body 5 of metal in which a fuel injection port 4 is formed. The fuel injection device 1 has a needle valve 6 opened or closed by a solenoid (not illustrated) and, when the needle valve 6 is opened, fuel in the valve body 5 is injected from the fuel injection port 4, and the fuel injected from the fuel injection port 4 is injected externally via nozzle holes 7 of the nozzle plate 3. The valve body 5 is circular in front view (see Fig. 4A) and an annular interlocking projection 8 is formed in the circumferential direction on the outer peripheral surface on the front end side (see Figs. 4A and 4B). The interlocking projection 8 has a rectangular cross section (cross section along the bus line of the valve body 5) and an arm part 10 of the nozzle plate 3 snaps onto the interlocking projection 8 (see Figs. 2C and 2D and Fig. 4C). The nozzle plate is injection-molded using synthetic resin such as PPS, PEEK, POM, PA, PES, PEI, or LCP.

### (Attachment structure of nozzle plate)

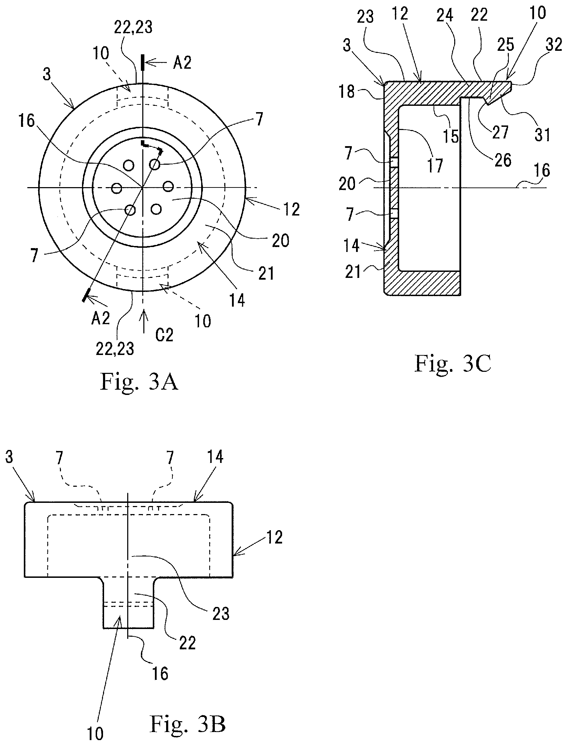

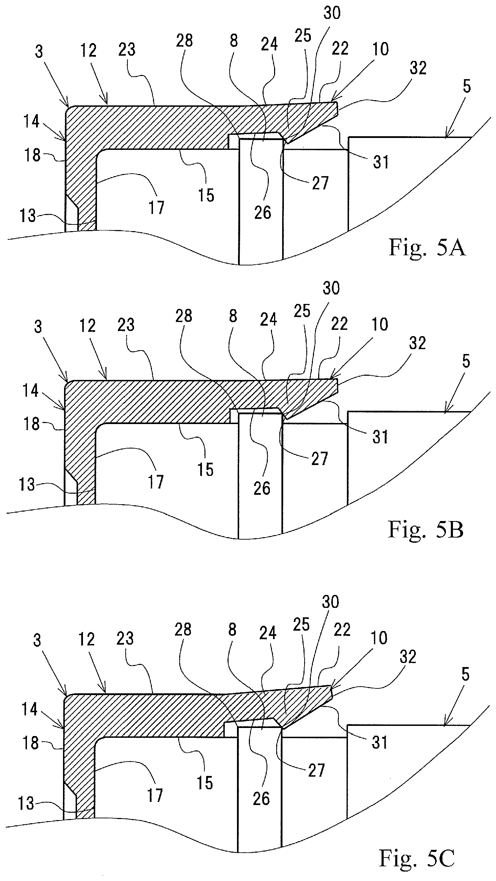

The attachment structure of the nozzle plate 3 according to the embodiment will be described with reference to Figs. 2 to 5. Fig. 3A is a front view illustrating the nozzle plate 3, Fig. 3B is a side view illustrating the nozzle plate 3 seen from the direction of C2 in Fig. 3A, and Fig. 3C is a cross sectional view illustrating the nozzle plate 3 in a plane including line A2-A2 in Fig. 3A. Fig. 4A is a front view illustrating the front end side of the valve body 5, Fig. 4B is a side view illustrating the front end side of the valve body 5, and Fig. 4C is a vertical cross sectional view illustrating the valve body in a plane including line A3-A3 in Fig. 4A. In addition, Fig. 5A is an enlarged view illustrating a part of Fig. 2C, Fig. 5B illustrates a first state in which the difference in thermal expansion between the nozzle plate 3 and the valve body 5 and the manufacturing error of the nozzle plate 3 and the valve body 5 have been absorbed, and Fig. 5C illustrates a second state in which the difference in thermal expansion between the nozzle plate 3 and the valve body 5 and the manufacturing error of the nozzle plate 3 and the valve body 5 have been absorbed.

As illustrated in Figs. 2 and 3, the nozzle plate 3 is a bottomed cylindrical body integrally having a cylindrical fitting part 12 to be pressure-fitted onto a front end side outer peripheral surface 11 of the valve body 5, a bottom wall part 14 formed so as to block one end side of the cylindrical fitting part 12, the bottom wall part 14 abutting against a front end surface 13 of the valve body 5, and a pair of arm parts 10 formed on the other end side of the cylindrical fitting part 12, the pair of arm parts 10 snapping onto the interlocking projection 8 of the valve body 5.

The cylindrical fitting part 12 is cylindrical and has an inner diameter slightly smaller than the outer diameter of the valve body 5 so as to be interference-fitted onto the front end side of the valve body 5. The cylindrical fitting part 12 has one end side blocked by the bottom wall part 14 and the other end side opened so as to receive the front end side of the valve body 5.

The bottom wall part 14 has a plurality of nozzle holes 7 (six nozzle holes at regular intervals in circumferential direction) for injecting fuel injected from the fuel injection port 4 of the fuel injection device 1 externally (into the intake air pipe 2). An inner surface 17 (surface in close contact with the front end surface 13 of the valve body 5) of the bottom wall part 14 is flat and an outer surface 18 is recessed in a central part 20. That is, in the bottom wall part 14, the central part 20 in which the nozzle holes 7 are formed is a discoid thin-walled part and an outer edge part 21, surrounding the thin-walled part, that connects to one end side of the cylindrical fitting part 12 is a thick-walled part, which is thicker than the central part 20. Although the number of the nozzle holes 7 formed in the bottom wall part 14 is six in the embodiment, the invention is not limited to the embodiment and the number of holes and the diameter of holes may be determined as appropriate according to requested fuel injection characteristics.

The pair of arm parts 10 is formed so as to project from the opening end of the other end side of the cylindrical fitting part 12 along the bus line of the cylindrical fitting part 12 and the pair of arm parts 10 is formed at intervals of 180 degrees in the circumferential direction of the other end side of the cylindrical fitting part 12. The arm part 10 is rectangular seen from the side of the nozzle plate 3 (seen in the direction of arrow C1 in Fig. 2A and the direction of arrow C2 in Fig. 3A) and entirely shaped like substantially a tongue piece. In the state in which the nozzle plate 3 is not yet attached to the valve body 5, an outer surface 22 of the arm part 10 is flush with an outer peripheral surface 23 of the cylindrical fitting part 12 (see Fig. 3C). The arm part 10 includes a spring action portion 24 used while being bent (elastically deformed) radially outward of the cylindrical fitting part 12 and a hook 25 formed integrally with the front end side of the spring action portion 24.

An inner surface 26 (surface facing the valve body 5) of the spring action portion 24 of the arm part 10 is placed radially outward of an inner peripheral surface 15 of the cylindrical fitting part 12 so as not to make contact with the interlocking projection 8 of the valve body 5 in the state (particularly, the state illustrated in Figs. 2C and 2D) in which the nozzle plate 3 is attached to the valve body 5. As described above, the spring action portion 24 of the arm part 10 is thinner than the cylindrical fitting part 12 so as to be relatively elastically deformable as compared with other components.

The hook 25 of the arm part 10 is provided with an inclined plane 27 pushed against the interlocking projection 8 of the valve body 5 by the elastic force of the spring action portion 24. The inclined plane 27 is tilted radially inward from the inner surface 26 of the spring action portion 24 so as to make contact with an edge 30 of both edges 28 and 30 of the interlocking projection 8, the edge 30 being away from the front end surface 13 of the valve body 5 (see Fig. 5A). When a difference in thermal expansion is generated between the valve body 5 of metal and the nozzle plate 3 of synthetic resin or manufacturing error appears in the valve body 5 and the nozzle plate 3, mainly the spring action portion 24 of the inclined plane 27 of this shape is elastically deformed like a cantilever to absorb the difference in thermal expansion between the valve body 5 and the nozzle plate 3 or the manufacturing error generated in the valve body 5 and the nozzle plate 3, the inclined plane 27 constantly makes contact with the edge 30 of the interlocking projection 8, and an inclined plane component force generated in the contact portion between the interlocking projection 8 and the edge 30 constantly pushes the inner surface 17 of the bottom wall part 14 against the front end surface 13 of the valve body 5 (see Figs. 5B and 5C). As a result, even when a difference in thermal expansion is generated between the valve body 5 of metal and the nozzle plate 3 of synthetic resin or manufacturing error appears in the valve body 5 and the nozzle plate 3 after the nozzle plate 3 is attached to the front end side of the valve body 5, no space is generated between the bottom wall part 14 of the nozzle plate 3 and the front end surface 13 of the valve body 5 and, even if the injection pressure of fuel acts on the nozzle plate 3, the nozzle plate 3 is not removed from the valve body 5 (see Figs. 5B and 5C).

On the front end side of the hook 25 on the front end side of the arm part 10, an engaging guide surface 31 is formed to cause the hook 25 to easily engage with the front end side of the valve body 5 and the hook 25 to easily climb over the interlocking projection 8 of the valve body 5. The engaging guide surface 31 has one end connected to an end part of the inclined plane 27 and the other end connected to a front end surface 32 of the arm part 10. The engaging guide surface 31 is tilted toward the outer surface 22 of the arm part 10 as moving away from the inclined plane 27. When the nozzle plate 3 is fitted onto the front end side of the valve body 5, the engaging guide surface 31 of this shape makes contact with an edge 33 of the front end of the valve body 5 and slowly bends the spring action portion 24 and, when the hook 25 climbs over the interlocking projection 8, the engaging guide surface 31 makes contact with the edge 28 of the interlocking projection 8 and slowly bends the spring action portion 24. As a result, the assembling of the nozzle plate 3 and the valve body 5 can be performed smoothly and easily.

### (Effect of first embodiment)

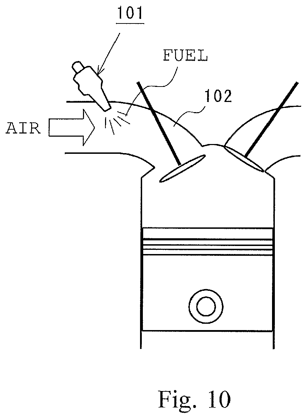

In the attachment structure of the nozzle plate 3 according to the embodiment, since the nozzle plate 3 is fixed to the front end side of the valve body 5 only by press-fitting the cylindrical fitting part 12 of the nozzle plate 3 onto the front end side of the valve body 5 and causing the hook 25 of the arm part 10 of the nozzle plate 3 to snap onto the interlocking projection 8 of the valve body 5, it is possible to reduce the manufacturing man-hours and manufacturing cost of the fuel injection device 1 as compared with the conventional example (see Fig. 10) in which a nozzle plate 103 of metal is fixed to the front end of a valve body 102 of metal by welding.

In addition, in the attachment structure of the nozzle plate 3 according to the embodiment, when a difference in thermal expansion is generated between the nozzle plate 3 and the valve body 5 or manufacturing error appears in the nozzle plate 3 and the valve body 5, mainly the spring action portion 24 of the arm part 10 of the nozzle plate 3 is elastically deformed to absorb the difference in thermal expansion between the nozzle plate 3 and the valve body 5 and manufacturing error of the nozzle plate 3 and the valve body 5, the inclined plane 27 of the hook 25 of the arm part 10 is constantly pushed against the interlocking projection 8 of the valve body 5 by the elastic force of the spring action portion 24, the bottom wall part 14 of the nozzle plate 3 is pushed against the front end surface 13 of the valve body 5 by the inclined plane component force acting on the inclined plane 27, so the nozzle plate 3 is not removed from the valve body 5 even when the injection pressure of fuel acts on the nozzle plate 3.

In the attachment structure of the nozzle plate 3 according to the embodiment, since the nozzle plate 3 is fixed to the front end side of the valve body 5 only by press-fitting the cylindrical fitting part 12 of the nozzle plate 3 onto the front end side of the valve body 5 and causing the hook 25 of the arm part 10 of the nozzle plate 3 to snap onto the interlocking projection 8 of the valve body 5, a failure (a nozzle hole 104 is blocked by welding spatter) does not occur unlike the conventional example in which the nozzle plate 103 of metal is fixed to the front end of the valve body 102 of metal by welding and all nozzle holes 7 surely achieve the function of atomizing fuel (see Fig. 10).

In the attachment structure of the nozzle plate 3 according to the embodiment, the shape (the shape of the cross section along an central axis 16) of the cross section of the hook 25 on the inside (facing the valve body 5) is a triangle formed by the inclined plane 27 and the engaging guide surface 31 and the ridge formed by the inclined plane 27 and the engaging guide surface 31 is disposed radially inward (close to the central axis 16) of the other part (the part of the hook 25 excluding the ridge).

In addition, in the attachment structure of the nozzle plate 3 according to the embodiment, the inclined plane 27 of the hook 25 has an inclined angle of 45 degrees (see Fig. 3C). However, the invention is not limited to the embodiment and the inclined angle may be adjusted to an optimum angle according to the difference in thermal expansion between the nozzle plate 3 and the valve body 5 and the like.

In addition, in the attachment structure of the nozzle plate 3 according to the embodiment, the front shape of the nozzle plate 3 and the valve body 5 is not limited to a circle and may be a polygon such as a hexagon, D-shape, ellipse, or the like.

### [Second embodiment]

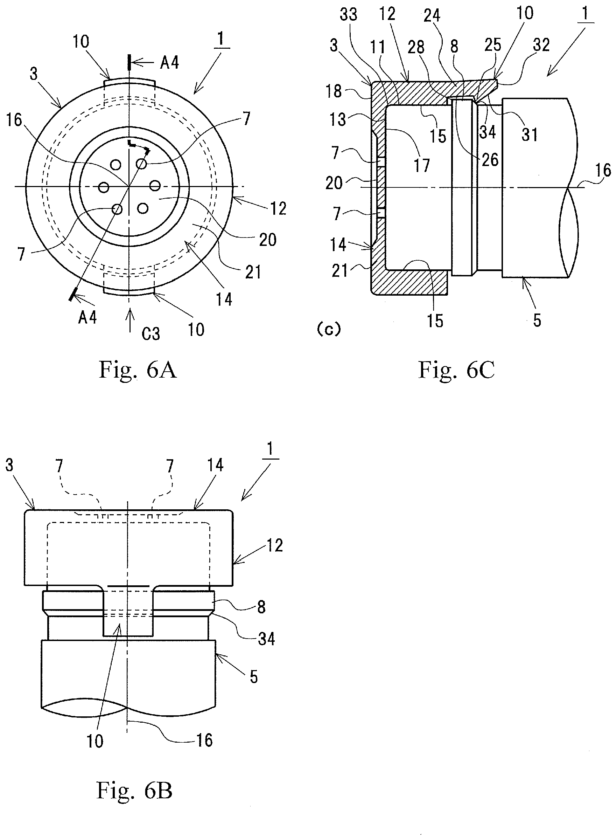

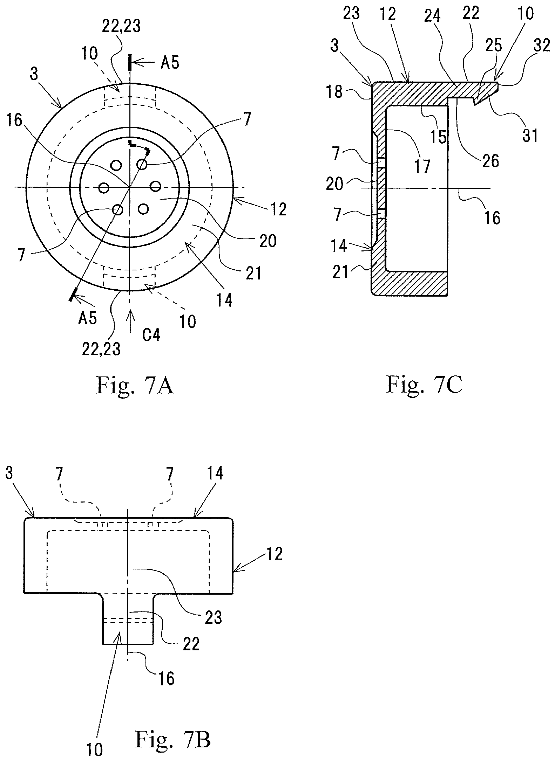

Figs. 6 to 9 illustrate an attachment structure of the nozzle plate 3 according to a second embodiment of the invention. In the description of the attachment structure of the nozzle plate 3 according to the embodiment, the same components in Figs. 6 to 9 as in the attachment structure of the nozzle plate 3 according to the first embodiment are given the same reference numerals and duplicate description as in the nozzle plate 3 according to the first embodiment is omitted.

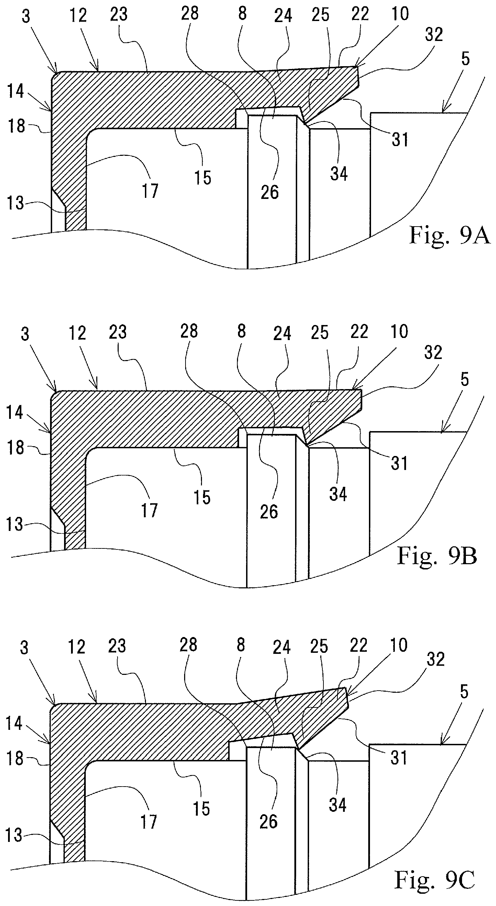

In the attachment structure of the nozzle plate 3 according to the embodiment, an inclined plane 34 is formed on the interlocking projection 8 of the valve body 5 and the hook 25 of the arm part 10 of the nozzle plate 3 is elastically pushed against the inclined plane 34 of the interlocking projection 8 by the spring action portion 24 of the arm part 10 (see Fig. 9A).

In the attachment structure of the nozzle plate 3 according to the embodiment, when a difference in thermal expansion is generated between the valve body 5 of metal and the nozzle plate 3 of synthetic resin or manufacturing error appears in the nozzle plate 3 and the valve body 5, the spring action portion 24 is elastically deformed like a cantilever to absorb the difference in thermal expansion between the nozzle plate 3 and the valve body 5 and the manufacturing error of the nozzle plate 3 and the valve body 5, the elastic force of the spring action portion 24 causes the hook 25 to constantly make contact with the inclined plane 34 of the interlocking projection 8, and an inclined plane component force generated in the contact portion between the inclined plane 34 of the interlocking projection 8 and the hook 25 can push the inner surface 17 of the bottom wall part 14 against the front end surface 13 of the valve body 5 (see Fig. 9B). As a result, even when a difference in thermal expansion is generated between the valve body 5 of metal and the nozzle plate 3 of synthetic resin or manufacturing error appears in the valve body 5 and the nozzle plate 3 after the nozzle plate 3 is attached to the front end side of the valve body 5, no space is generated between the bottom wall part 14 of the nozzle plate 3 and the front end surface 13 of the valve body 5 and, even if the injection pressure of fuel acts on the nozzle plate 3, the nozzle plate 3 is not removed from the valve body 5 (see Figs. 9B and 9C).

In the attachment structure of the nozzle plate according to the embodiment, it is possible to obtain effects similar to those in the attachment structure of the nozzle plate 3 according to the first embodiment.

In the attachment structure of the nozzle plate according to the embodiment, the shape of the cross section of the hook 25 on the inside is a triangle projecting radially inward of the nozzle plate 3 and the apex of the triangle makes contact with the inclined plane 34 of the interlocking projection 8.

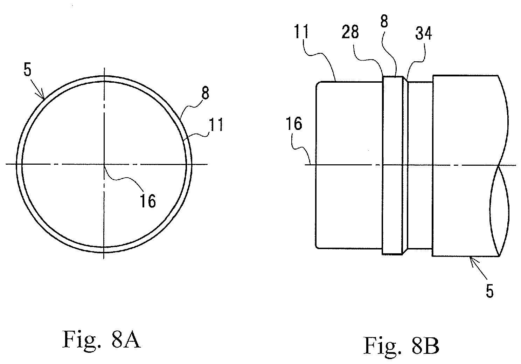

In addition, in the attachment structure of the nozzle plate according to the embodiment, the inclined plane 34 of the interlocking projection 8 has an inclined angle of 45 degrees (see Fig. 8). However, the invention is not limited to the embodiment and the inclined angle may be adjusted to an optimum angle according to the difference in thermal expansion between the nozzle plate 3 and the valve body 5 and the manufacturing error of the nozzle plate 3 and the valve body 5 and the like.

### [Modification 1 of first and second embodiments]

Although the first embodiment and the second embodiment indicate aspects in which the pair of arm parts 10 is formed at intervals of 180 degrees in the circumferential direction on the other end side of the cylindrical fitting part 12, the invention is not limited to the aspects and the number of the arm parts 10 may be at least one (one or more).

### [Modification 2 of first and second embodiments]

In the first embodiment and the second embodiment, the part corresponding to the edge 28 of the interlocking projection 8 illustrated in Fig. 4B and Fig. 8B is chamfered (C-chamfered or R-chamfered), so that the hook 25 makes contact with the chamfered portion of the interlocking projection 8 and slowly bends the spring action portion 24 when the hook 25 climbs over the interlocking projection 8. As a result, the assembling of the nozzle plate 3 and the valve body 5 can be performed easily and smoothly.

### [Third embodiment]

### (Fuel injection device)

Fig. 10 illustrates the use state of a fuel injection device 101 (see Fig. 11). As illustrated in Fig. 10, the fuel injection device 101 of port injection type is installed at an intermediate point on an intake air pipe 102 of the engine, injects fuel into the intake air pipe 102, mixes air introduced to the intake air pipe 102 and the fuel, and generates a combustible gas mixture.

Fig. 11 illustrates the front end side of the fuel injection device 101 to which the fuel injection device nozzle plate 103 (abbreviated below as the nozzle plate) has been attached. Fig. 11A is a side view illustrating the front end side of the fuel injection device 101. Fig. 11B is a side view illustrating the front end side of the fuel injection device 101 seen from the direction of arrow C101 in Fig. 11A. Fig. 11C is a cross sectional view illustrating the front end side of the fuel injection device 101 taken along line A101-A101 in the nozzle plate 103 in Fig. 11A. Fig. 11D is a cross sectional view illustrating the front end side of the fuel injection device 101 taken along line A101-A101 in the entire fuel injection device 101 in Fig. 11A.

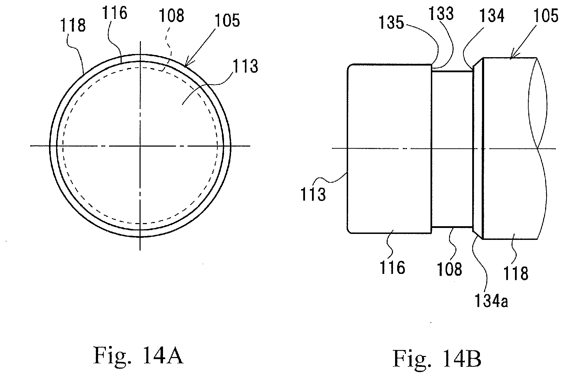

As illustrated in Fig. 11, in the fuel injection device 101, the nozzle plate 103 of synthetic resin is attached to the front end side of a valve body 105 of metal in which a fuel injection port 104 is formed. The fuel injection device 101 has a needle valve 106 opened or closed by a solenoid (not illustrated) and, when the needle valve 106 is opened, fuel in the valve body 105 is injected from the fuel injection port 104 and the fuel injected from the fuel injection port 104 is injected externally via the nozzle holes 107 of the nozzle plate 103. The valve body 105 is circular in front view (see Fig. 14A) and the annular interlocking groove 108 is formed in the circumferential direction on the outer peripheral surface on the front end side (see Figs. 14A and 14B). The interlocking projection 108 has a rectangular cross section (cross section along the bus line of the valve body 105) and the front end of the arm part 110 of the nozzle plate 103 engages with the interlocking projection 108 (see Figs. 11C and 11D). The nozzle plate 103 is injection-molded using synthetic resin such as PPS, PEEK, POM, PA, PES, PEI, or LCP.

### (Attachment structure of nozzle plate)

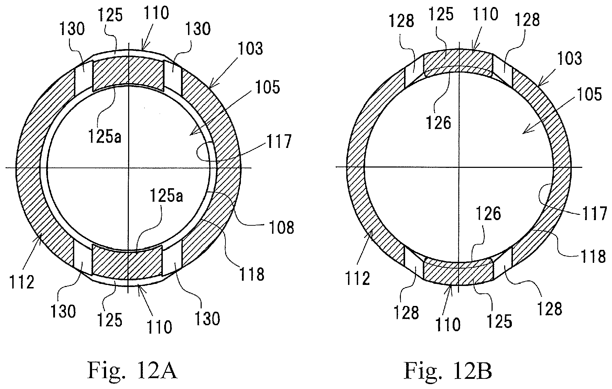

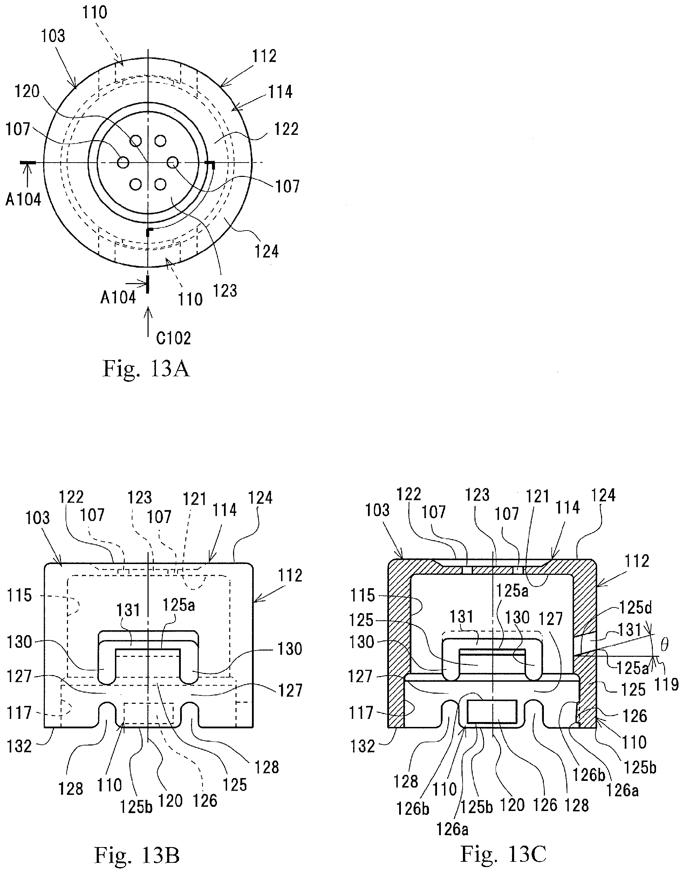

The attachment structure of the nozzle plate 103 according to the embodiment will be described below with reference to Figs. 11 to 14. Fig. 12A is a cross sectional view taken along line A102-A102 in Fig. 11C and Fig. 12B is a cross sectional view taken along line A103-A103 in Fig. 11C. Fig. 13A is a front view illustrating the nozzle plate 103, Fig. 13B is a side view illustrating the nozzle plate 103 seen from the direction of arrow C102 in Fig. 13A, and Fig. 13C is a cross sectional view illustrating the nozzle plate 103 taken along line A104-A104 in Fig. 13A. In addition, Fig. 14A is a front view illustrating the front end side of the valve body 105 and Fig. 14B is a side view illustrating the front end side of the valve body 105.

As illustrated in Figs. 11 to 14, the nozzle plate 103 is a bottomed cylindrical body integrally having a cylindrical fitting part 112 to be pressure-fitted onto front end side outer peripheral surfaces 111a and 111b of the valve body 105, the bottom wall part 114 formed so as to block one end side of the cylindrical fitting part 112, the bottom wall part 114 abutting against the front end surface 113 of the valve body 105, and the pair of arm parts 110 formed on the other end side of the cylindrical fitting part 112, the pair of arm parts 110 engaging with the interlocking groove 108 of the valve body 105. Although the pair of arm parts 110 is formed on the other end side of the cylindrical fitting part 112 in the aspect in the embodiment, the invention is not limited to the aspect and at least one arm part 110 only needs to be formed on the other end side of the cylindrical fitting part 112.

The cylindrical fitting part 112 is cylindrical and has an inner diameter slightly smaller than the outer diameter of the valve body 105 so as to be interference-fitted onto the front end side of the valve body 105. The cylindrical fitting part 112 has one end side blocked by the bottom wall part 114 and the other end side opened so as to receive the front end side of the valve body 105. In addition, the cylindrical fitting part 112 has a small-diameter hole part 115 on one end side to be press-fitted onto a front end side small-diameter part 116 of the valve body 105 and a large-diameter hole 117 on the other end side to be press-fitted onto a front end side large-diameter part 118. In the valve body 105 onto which the cylindrical fitting part 112 is to be press-fitted, the interlocking groove 108 is formed between the front end side small-diameter part 116 to be connected to the front end surface 113 and the front end side large-diameter part 118 positioned away from the front end surface 113. The cross section of the interlocking groove 108 of the valve body 105 is a rectangular recess taken along a central axis 120 of the valve body 105 (see Figs. 11C and 11D and Fig. 14).

The bottom wall part 114 has a plurality of nozzle holes 107 (six nozzle holes at regular intervals in circumferential direction) for injecting fuel injected from the fuel injection port 104 of the fuel injection device 101 externally (into the intake air pipe 102). An inner surface 121 (surface in close contact with the front end surface 113 of the valve body 105) of the bottom wall part 14 is a flat surface and an outer surface 122 is recessed in a central part 123. That is, in the bottom wall part 114, the central part 123 in which nozzle holes 107 are formed is a discoid thin-walled part and an outer edge part 124, surrounding the central part 123, that connects to one end side of the cylindrical fitting part 112 is a thick-walled part, which is thicker than the central part 123. Although the number of the nozzle holes 107 formed in the bottom wall part 114 is six in the embodiment, the invention is not limited to the embodiment and the number of holes and the diameter of holes may be determined as appropriate according to necessary fuel injection characteristics.

The arm part 110 includes an arm part main body 125 having a front end 125a engaging with the interlocking groove 108 of the valve body 105, a projection 126, formed on an inner surface 125c of the arm part main body 125, that makes contact with the outer peripheral surface 111b of the valve body 105 at a rear end 125b of the arm part main body 125, and an arm part main body supporting portion 127 elastically supporting the arm part main body 125 with respect to the cylindrical fitting part 112.

The contour of the arm part main body 125 is formed substantially by a pair of first axial direction grooves 128 and 128, a pair of second axial direction grooves 130 and 130, and a circumferential direction groove 131 formed in the cylindrical fitting part 112. The pair of first axial direction grooves 128 and 128 are formed along the central axis 120 (along the bus line) of the cylindrical fitting part 112 from one end 132 of the cylindrical fitting part 112 so as to be spaced apart in the circumferential direction of the cylindrical fitting part 112. The pair of second axial direction grooves 130 are grooves like long holes disposed in the cylindrical fitting part 112 so as to be away from the first axial direction grooves 128 and 128 along extension lines of the first axial direction grooves 128 and 128 (extension grooves along the central axis 120) so as to face the pair of first axial direction grooves 128 and 128. If the end parts of the second axial direction grooves 130 and 130 close to the first axial direction grooves 128 and 128 are assumed to be one end sides of the second axial direction grooves 130 and 130 and the end parts of the second axial direction grooves 130 and 130 away from the first axial direction grooves 128 and 128 are assumed to be the other end sides of the second axial direction grooves 130 and 130, the other end sides of the pair of second axial direction grooves 130 and 130 are connected to each other by the circumferential direction groove 131 formed along the circumferential direction of the cylindrical fitting part 112. The pair of first axial direction grooves 128 and 128, the pair of the second axial direction grooves 130 and 130, and the circumferential direction groove 131 penetrate the cylindrical fitting part 112 from the outer peripheral surface to the inner surface. As described above, the arm part main body 125 is separated from the cylindrical fitting part 112 except a part (the arm part main body supporting portions 127 and 127) by the pair of first axial direction grooves 128 and 128, the pair of second axial direction grooves 130 and 130, and the circumferential direction groove 131 formed in the cylindrical fitting part 112. In addition, if the end part of the arm part main body 125 close to one end (opening end) 132 of the cylindrical fitting part 112 is assumed to be one end (rear end) 125b and the end part of the arm part main body 125 away from the one end (opening end) 132 of the cylindrical fitting part 112 in the direction of the central axis 120 is assumed to be the other end (front end) 125a, the part located substantially in the middle of the part between the one end 125b and the other end 125a is elastically supported by the arm part main body supporting portions 127 and 127. In addition, the circumferential direction groove 131 is obliquely formed so that the edge close to the outer peripheral surface is positioned closer to the bottom wall part 114 than the edge close to the inner peripheral surface of the cylindrical fitting part 112 in the embodiment. As a result, a front end surface 125d of the arm part main body 125 is obliquely formed so that the angle formed by the front end surface 125d and a virtual straight line 119 orthogonal to the central axis 120 of the cylindrical fitting part 112 is 0 (for example, 10° to 45°). The arm part main body 125 is rectangular seen from the side of the nozzle plate 103, as illustrated in Fig. 11B and Fig. 13B.

The arm part main body supporting portions 127 and 127 are the remaining portions formed between the pair of first axial direction grooves 128 and 128 and the pair of second axial direction grooves 130 and 130 formed in the cylindrical fitting part 112. The arm part main body supporting portions 127 and 127 connect both sides of the arm part main body 125 (both sides in the width direction along the circumference of the cylindrical fitting part 112) to the cylindrical fitting part 112 and elastically supports the arm part main body 125 with respect to the cylindrical fitting part 112 so that the arm part main body 125 can swing.

The projection 126 is a rectangular projection disposed closer to (the one end 125b of the arm part main body 125) the one end 132 of cylindrical fitting part 112 than the arm part main body supporting portion 127 so as to make contact with a broad area in the circumferential direction of the valve body 105 when the nozzle plate 103 is press-fitted onto the valve body 105. When one end 126a of the end of the projection 126 is assumed to be close to the one end 132 of the cylindrical fitting part 112 and the other end 126b of the projection 126 is assumed to be away from the one end 132 of the cylindrical fitting part 112 along the central axis 120, the one end 126a is closer (radially inward) to the central axis 120 of the cylindrical fitting part 112 than the other end 126b. The projection 126 of this shape lifts (moves the one end 125b away from the outer peripheral surface of the valve body 105 as illustrated in Fig. 12B) the one end 125b of the arm part main body 125 using the pair of arm part main body supporting portions 127 and 127 as the fulcrum when the cylindrical fitting part 112 of the nozzle plate 103 is press-fitted onto the valve body 105, puts the other end (front end) 125a of the arm part main body 125 into the interlocking groove 108 (see Fig. 12A), elastically deforms the other end (front end) 125a of the arm part main body 125 so as to be crashed, and pushes the oblique front end surface 125d of the arm part main body 125 against an edge 135 (the edge 135 formed by a groove wall 133 of a pair of groove walls 133 and 134 of the interlocking groove 108 close to the front end surface 113 of the valve body 105 and the outer peripheral surface of the valve body 105) (see Fig. 11C and 11D). This causes an elastic force (elastic force caused when the other end (front end) 125a of the arm part main body 125 is crashed) to constantly act on the nozzle plate 103 in a direction in which the bottom wall part 114 is pushed against the front end surface 113 of the valve body 105. The inner peripheral edge close to the one end 132 of the cylindrical fitting part 112 and the one end 126a of the projection 126 are preferably chamfered so that the valve body 105 is easily fitted to the cylindrical fitting part 112. In addition, as illustrated in Fig. 14B, the end part of the front end side large-diameter part 118 close to the interlocking groove 108 may be chamfered. A chamfered surface 134a is formed to smoothly guide the movements of the one end 125b of the arm part main body 125 and the projection 126 using an inclined surface so that the valve body 105 is easily fitted into the cylindrical fitting part 112 and the chamfered surface 134a preferably prevents the inner surface 125c of the arm part main body 125 from making contact with the valve body 105.

### (Effect of third embodiment)

In the attachment structure of the nozzle plate 103 according to the embodiment, if the cylindrical fitting part 112 of the nozzle plate 103 is press-fitted onto the front end side of the valve body 105, the projection 126 of the arm part 110 puts the front end 125a of the arm part main body 125 into the interlocking groove 108 of the valve body 105, the front end 125a of the arm part main body 125 is pushed against the edge 135 of the interlocking groove 108 (the front end 125a of the arm part main body 125 engages with the interlocking groove 108 of the valve body 105) in the state in which the front end 125a of the arm part main body 125 is elastically deformed so as to be crashed, and the nozzle plate 103 is fixed to the front end side of the valve body 105 while being retained, so it is possible to reduce the manufacturing man-hours and manufacturing cost of the fuel injection device 101 as compared with the conventional example (see Fig. 29) in which a nozzle plate 1103 of metal is fixed to the front end of a valve body 1102 of metal by welding.

In addition, in the attachment structure of the nozzle plate 103 according to the embodiment, when a difference in thermal expansion is generated between the nozzle plate 103 of synthetic resin and the valve body 105 of metal after the nozzle plate 103 is press-fitted onto the valve body 105, the other end (front end) 125a of the arm part main body 125 having been elastically deformed so as to be crashed is elastically restored to absorb the difference in thermal expansion between the nozzle plate 103 and the valve body 105, it is possible to maintain the state in which the front end surface 125d of the arm part main body 125 is pushed against the edge 135 of the groove wall 133 of the interlocking groove 108, no space is generated between the bottom wall part 114 of the nozzle plate 103 and the front end surface 113 of the valve body 105,
and the elastic force of the other end (front end) 125a of the arm part main body 125 having been elastically deformed so as to be crashed counteracts the force in a direction in which the nozzle plate 103 is removed from the valve body 105. As a result, in the attachment structure of the nozzle plate 103 according to the embodiment, the nozzle plate 103 is not removed from the valve body 105 even when the injection pressure of fuel acts on the nozzle plate 103, and the nozzle plate 103 achieves a desired function (function of atomizing fuel). Since the nozzle plate 103 of synthetic resin has a thermal expansion rate larger than in the valve body 105 of metal, the thermal expansion of the nozzle plate 103 is longer than in the valve body 105 of metal.

In addition, in the attachment structure of the nozzle plate 103 according to the embodiment, when the valve body 105 and the nozzle plate 103 have manufacturing error, the other end (front end) 125a of the arm part main body 125 makes contact with the edge 135 of the groove wall 133 of the interlocking groove 108 in the state in which the other end (front end) 125a of the arm part main body 125 is elastically deformed to absorb the manufacturing error of the valve body 105 and the nozzle plate 103, the elastic contact between the other end (front end) 125a of the arm part main body 125 and the edge 135 of the groove wall 133 of the interlocking groove 108 is kept, and the elastic force of the other end (front end) 125a of the arm part main body 125 elastically deformed so as to be crashed counteracts on the force in a direction in which the nozzle plate 103 is removed from the valve body 105. As a result, in the attachment structure of the nozzle plate 103 according to the embodiment, no space is generated between the bottom wall part 114 of the nozzle plate 103 and the front end surface 113 of the valve body 105 even when the valve body 105 of metal and the nozzle plate 103 of synthetic resin have manufacturing error, and the nozzle plate 103 is not removed from the valve body 105 even when the injection pressure of fuel acts on the nozzle plate 103.

In the attachment structure of the nozzle plate 103 according to the embodiment, if the cylindrical fitting part 112 of the nozzle plate 103 is press-fitted onto the front end side of the valve body 105, the projection 126 of the arm part 110 puts the other end (front end) 125a of the arm part main body 125 into the interlocking groove 108 of the valve body 105, the other end (front end) 125a of the arm part main body 125 is pushed against the edge 135 of the interlocking groove 108 (the other end (front end) 125a of the arm part main body 125 engages with the interlocking groove 108 of the valve body 105) in the state in which the other end (front end) 125a of the arm part main body 125 is elastically deformed so as to be crashed, and the nozzle plate 103 is fixed to the front end side of the valve body 105 while being retained, so a failure (a nozzle hole 1104 is blocked by welding spatter) does not occur unlike the conventional example (see Fig. 29) in which the nozzle plate 1103 of metal is fixed to the front end of the valve body 1102 of metal by welding and all nozzle holes 107 surely achieve the function of atomizing fuel.

Although Figs. 11A and 13A illustrates an aspect in which the pair of arm parts 110 are formed along the circumferential direction of the cylindrical fitting part 112, the invention is not limited to the aspect and at least one arm part 110 only needs to be formed in the cylindrical fitting part 112 or three or more arm parts 110 may be formed in the cylindrical fitting part 112.

In addition, in the attachment structure of the nozzle plate 103 according to the embodiment, the front shape of the nozzle plate 103 and the valve body 105 is not limited to a circle and may be a polygon such as a hexagon, D-shape, ellipse, or the like.

### [Fourth embodiment]

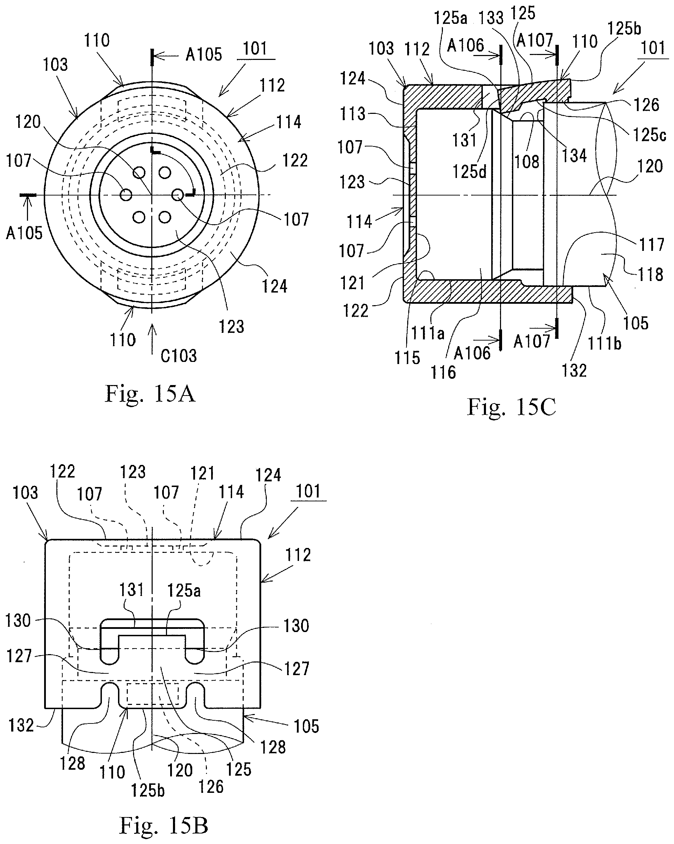

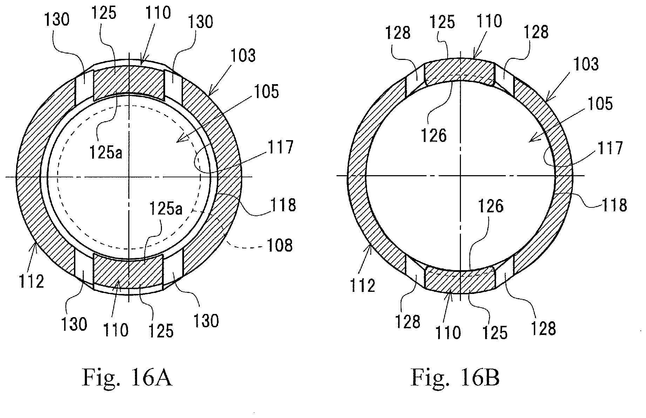

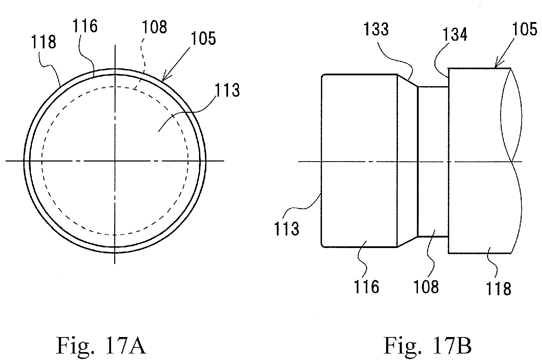

Figs. 15 to 17 illustrate an attachment structure of the nozzle plate 103 according to a fourth embodiment of the invention. In the description of the attachment structure of the nozzle plate 103 according to the embodiment, the same components in Figs. 15 to 17 as in the attachment structure of the nozzle plate 103 according to the third embodiment are given the same reference numerals and duplicate description as in the nozzle plate 103 according to the third embodiment is omitted.

In the attachment structure of the nozzle plate 103 according to the embodiment, of the pair of the groove walls 133 and 134 forming the interlocking groove 108 of the valve body 105, the groove wall 133 close to the front end surface 113 is an inclined plane and, when the cylindrical fitting part 112 is press-fitted onto the front end side of the valve body 105, the one end (rear end) 125b of the arm part main body 125 is pushed up by the projection 126 and the other end (front end) 125a of the arm part main body 125 is put in the interlocking groove 108, the other end (front end) 125a (particularly, the inside in contact with the groove wall 133 as an inclined plane) of the arm part main body 125 is pushed against the groove wall 133 as the inclined plane of the interlocking groove 108 in the state in which the other end 125a is elastically deformed so as to be crashed, and the nozzle plate 103 is fixed to the front end side of the valve body 105 while being retained.

In the attachment structure of the nozzle plate 103 according to the embodiment, when a difference in thermal expansion is generated between the valve body 105 of metal and the nozzle plate 103 of synthetic resin, the other end (front end) 125a of the arm part main body 125 in contact with the groove wall 133 as an inclined plane of the interlocking groove 108 while being elastically deformed elastically restores to absorb the difference in thermal expansion between the valve body 105 and the nozzle plate 103, the elastic contact between the other end (front end) 125a of the arm part main body 125 and the groove wall 133 as an inclined plane of the interlocking groove 108 is kept, and the elastic force of the other end (front end) 125a of the arm part main body 125 elastically deformed so as to be crashed counteracts the force in a direction in which the nozzle plate 103 is removed from the valve body 105. As a result, even when a difference in thermal expansion is generated between the valve body 105 of metal and the nozzle plate 103 of synthetic resin after the nozzle plate 103 is attached to the front end side of the valve body 105, no space is generated between the bottom wall part 114 of the nozzle plate 103 and the front end surface 113 of the valve body 105 and the elastic force of the other end (front end) 125a of the arm part main body 125 having been elastically deformed so as to be crashed counteracts the force in a direction in which the nozzle plate 103 is removed from the valve body 105. Accordingly, even if the injection pressure of fuel acts on the nozzle plate 103, the nozzle plate 103 is not removed from the valve body 105.

In addition, in the attachment structure of the nozzle plate 103 according to the embodiment, when the valve body 105 and the nozzle plate 103 have manufacturing error, the other end (front end) 125a of the arm part main body 125 makes contact with the groove wall 133 as an inclined plane of the interlocking groove 108 in the state in which the other end (front end) 125a of the arm part main body 125 is elastically deformed to absorb the manufacturing error of the valve body 105 and the nozzle plate 103 and the elastic contact between the other end (front end) 125a of the arm part main body 125 and the groove wall 133 as an inclined plane of the interlocking groove 108 is kept. As a result, in the attachment structure of the nozzle plate 103 according to the embodiment, no space is generated between the bottom wall part 114 of the nozzle plate 103 and the front end surface 113 of the valve body 105 even when the valve body 105 of metal and the nozzle plate 103 of synthetic resin have manufacturing error and the elastic force of the other end (front end) 125a of the arm part main body 125 having been elastically deformed so as to be crashed counteracts the force in a direction in which the nozzle plate 103 is removed from the valve body 105. Accordingly, even when the injection pressure of fuel acts on the nozzle plate 103, the nozzle plate 103 is not removed from the valve body 105.

In the attachment structure of the nozzle plate 103 according to the embodiment, it is possible to obtain effects similar to those in the attachment structure of the nozzle plate 103 according to the third embodiment. That is, in the attachment structure of the nozzle plate 103 according to the embodiment, when the cylindrical fitting part 112 of the nozzle plate 103 is press-fitted onto the front end side of the valve body 105, the projection 126 of the arm part 110 puts the other end (front end) 125a of the arm part main body 125 into the interlocking groove 108 of the valve body 105, the other end (front end) 125a of the arm part main body 125 is pushed against the groove wall 133 as an inclined plane of the interlocking groove 108 of the valve body 105 (the other end (front end) 125a of the arm part main body 125 engages with the interlocking groove 108 of the valve body 105) in the state in which the other end (front end) 125a of the arm part main body 125 is elastically deformed so as to be crashed, and the nozzle plate 103 is fixed to the front end side of the valve body 105 while being retained, so it is possible to reduce the manufacturing man-hours and manufacturing cost of the fuel injection device 101 as compared with the conventional example (see Fig. 29) in which the nozzle plate 1103 of metal is fixed to the front end of the valve body 1102 of metal by welding.

In addition, in the attachment structure of the nozzle plate 103 according to the embodiment, if the cylindrical fitting part 112 of the nozzle plate 103 is press-fitted onto the front end side of the valve body 105, the projection 126 of the arm part 110 puts the other end (front end) 125a of the arm part main body 125 into the interlocking groove 108 of the valve body 105, the other end (front end) 125a of the arm part main body 125 is pushed against the groove wall 133 as an inclined plane of the interlocking groove 108 of the valve body 105 (the other end (front end) 125a of the arm part main body 125 engages with the interlocking groove 108 of the valve body 105) in the state in which the other end (front end) 125a of the arm part main body 125 is elastically deformed so as to be crashed, and the nozzle plate 103 is fixed to the front end side of the valve body 105 while being retained, so a failure (the nozzle hole 1104 is blocked by welding spatter) does not occur unlike the conventional example in which the nozzle plate 1103 of metal is fixed to the front end of the valve body 1102 of metal (see Fig. 29) by welding and all nozzle holes 107 surely achieve the function of atomizing fuel.

In the interlocking groove 108 according to the embodiment, of the pair of groove walls 133 and 134, the entire groove wall 133 close to the bottom wall part 114 is used as an incline surface. However, the invention is not limited to the embodiment and only a part of the groove wall 133 may be an inclined plane. In addition, although the front end surface 125d of the arm part main body 125 is formed so that 0 in Fig. 13C equals 0 degrees (θ = 0°) in the embodiment, 0 may be larger than 0 degrees as long as the contact state between the other end (front end) 125a of the arm part main body 125 illustrated in Fig. 15C and the groove wall 133 can be kept.

### [Fifth embodiment]

### (Fuel injection device)

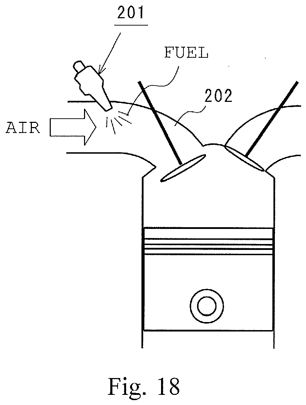

Fig. 18 illustrates the use state of the fuel injection device 201 (see Fig. 19). As illustrated in Fig. 18, the fuel injection device 201 of port injection type is installed at an intermediate point on an intake air pipe 202 of the engine, injects fuel into the intake air pipe 202, mixes air introduced to the intake air pipe 202 and the fuel, and generates a combustible gas mixture.

Fig. 19 illustrates the front end side of the fuel injection device 201 to which the fuel injection device nozzle plate 203 (abbreviated below as the nozzle plate) has been attached. Fig. 19A is a front view illustrating the front end side of the fuel injection device 201. Fig. 19B is a side view illustrating the front end side of the fuel injection device 201 seen from the direction of arrow C201 in Fig. 19A. Fig. 19C is a cross sectional view illustrating the front end side of the fuel injection device 201 taken along line A201-A201 in the nozzle plate 203 in Fig. 19A. Fig. 19D is a cross sectional view illustrating the front end side of the fuel injection device 201 taken along line A201-A201 in the entire fuel injection device 201 in Fig. 19A.

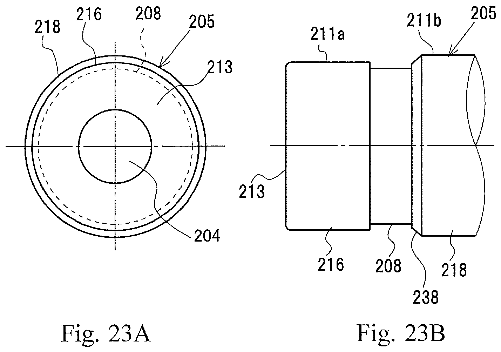

As illustrated in Fig. 19, in the fuel injection device 201, the nozzle plate 203 of synthetic resin is attached to the front end side of the valve body 205 of metal in which a fuel injection port 204 is formed. The fuel injection device 201 has a needle valve 206 opened or closed by a solenoid (not illustrated) and, when the needle valve 206 is opened, fuel in the valve body 205 is injected from the fuel injection port 204 and the fuel injected from the fuel injection port 204 is injected externally via the nozzle holes 207 of the nozzle plate 203. The valve body 205 is circular in front view (see Fig. 23A) and the annular interlocking groove 208 is formed in the circumferential direction on a front end side outer peripheral surface 211a (see Figs. 23A and 23B). The interlocking groove 208 has a rectangular cross section (cross section along the bus line of the valve body 205) and the arm part 210 of the nozzle plate 203 engages with the interlocking groove 208 (see Figs. 19C and 19D). The nozzle plate 203 is injection-molded using synthetic resin such as PPS, PEEK, POM, PA, PES, PEI, or LCP.

### (Attachment structure of nozzle plate)

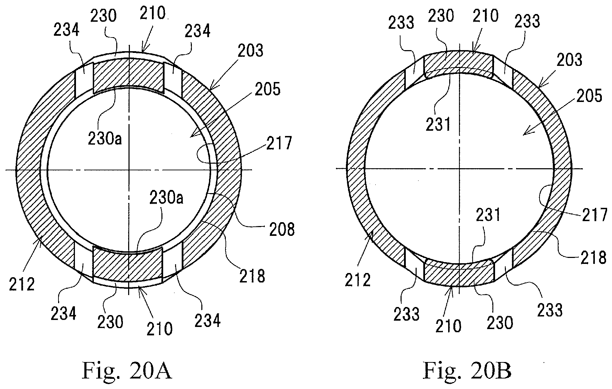

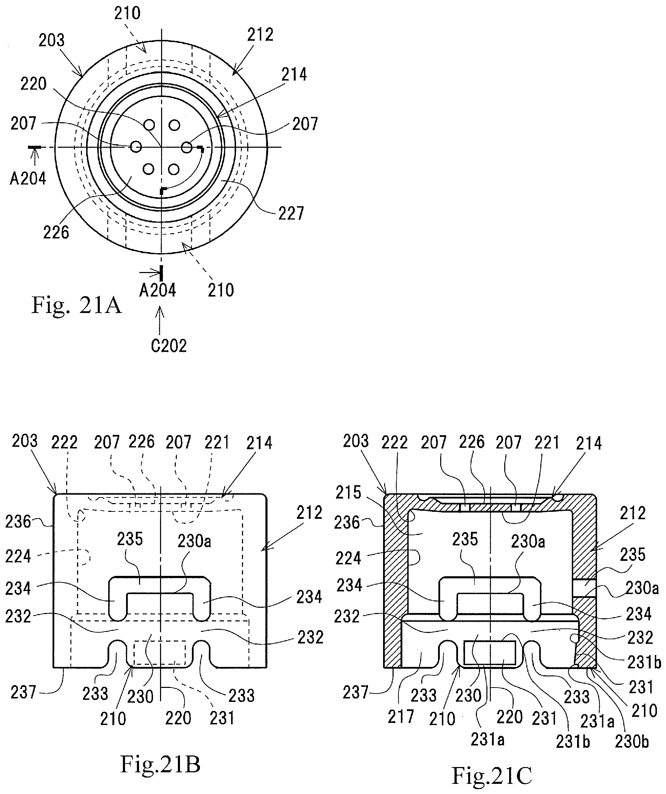

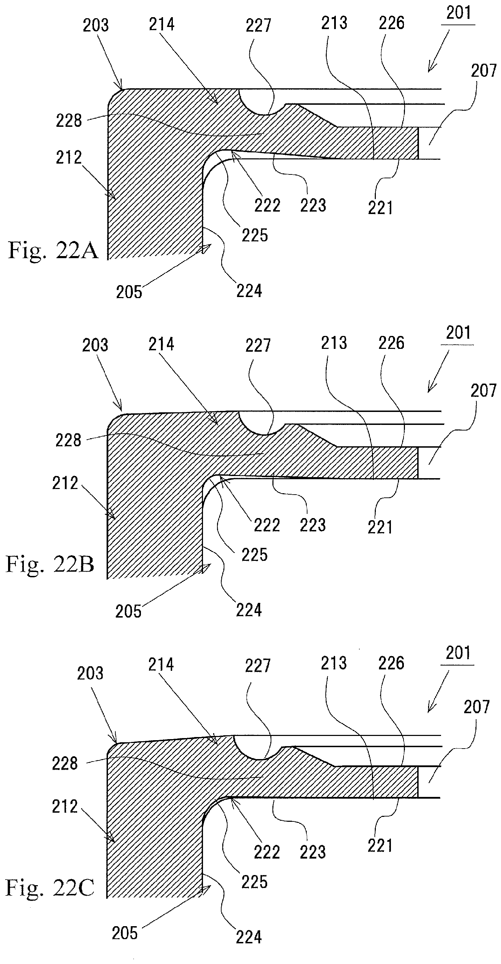

The attachment structure of the nozzle plate 203 according to the embodiment will be described with reference to Figs. 19 to 23. Fig. 20A is a cross sectional view taken along line A202-A202 in Fig. 19C and Fig. 20B is a cross sectional view taken along line A203-A203 in Fig. 19C. Fig. 21A is a front view illustrating the nozzle plate 203, Fig. 21B is a side view illustrating the nozzle plate 203 seen from the direction of arrow C202 in Fig. 21A, and Fig. 21C is a cross sectional view illustrating the nozzle plate 203 taken along line A204-A204 in Fig. 21A. Fig. 22A illustrates a first engagement state of the nozzle plate 203 and the valve body 205 and Fig. 22B illustrates a second engagement state of the nozzle plate 203 and the valve body 205. Fig. 23A is a front view illustrating the front end side of the valve body 205 and Fig. 23B is a side view illustrating the front end side of the valve body 205.

As illustrated in Figs. 19 to 23, the nozzle plate 203 is a bottomed cylindrical body integrally having the cylindrical fitting part 212 to be pressure-fitted onto the front end side outer peripheral surfaces 211a and 211b of the valve body 205, the bottom wall part 214 formed so as to block one end side of the cylindrical fitting part 212, the bottom wall part 214 abutting against the front end surface 213 of the valve body 205, and the arm part 210 formed on the other end side of the cylindrical fitting part 212, the arm part 210 engaging with the interlocking groove 208 of the valve body 205. Although the embodiment indicates an aspect in which the pair of arm parts 210 is formed on the other end side of the cylindrical fitting part 212, the invention is not limited to the aspect and at least one arm part 210 only needs to be formed on the other end side of the cylindrical fitting part 212.

The cylindrical fitting part 212 is cylindrical and has an inner diameter slightly smaller than the outer diameter of the valve body 205 so as to be interference-fitted onto the front end side of the valve body 205. The cylindrical fitting part 212 has one end side blocked by the bottom wall part 214 and the other end side opened so as to receive the front end side of the valve body 205. In addition, the cylindrical fitting part 212 has a small-diameter hole part 215 on one end side to be press-fitted onto a front end side small-diameter part 216 of the valve body 205 and a large-diameter hole 217 on the other end side to be press-fitted onto a front end side large-diameter part 218 of the valve body 205. In the valve body 205 onto which the cylindrical fitting part 212 is to be press-fitted, the interlocking groove 208 is formed between the front end side small-diameter part 216 to be connected to the front end surface 213 and the front end side large-diameter part 218 positioned away from the front end surface 213. The interlocking groove 208 of the valve body 205 has a rectangular recessed cross section taken along a central axis 220 of the valve body 205 (see Figs. 19C and 19D and Fig. 23).

The bottom wall part 214 has the plurality of nozzle holes 207 (six nozzle holes at regular intervals in circumferential direction) for injecting fuel injected from the fuel injection port 204 of the fuel injection device 201 externally (into the intake air pipe 202).

The bottom wall part 214 is provided with a flat surface (valve body abutment part) 221 that first makes contact with the front end surface 213 of the valve body 205 when the cylindrical fitting part 212 is press-fitted onto the front end side of the valve body 205 in the central part of the inside (the side facing the front end surface 213 of the valve body 205). The flat surface 221 has the plurality of nozzle holes 207 and makes contact with the periphery of the fuel injection port 204 of the valve body 205. The bottom wall part 214 has a recessed portion 222 (which is recessed from the flat surface 221) radially inward of the connection portion with the cylindrical fitting part 212 to the outer edge of the flat surface 221. The recessed portion 222 is formed inside the bottom wall part 214 so that space is generated with respect to the front end surface 213 of the valve body 205 in the state in which the flat surface 221 first makes contact with the front end surface 213 of the valve body 205. The recessed portion 222 is formed by a tapered surface 223 extending radially outward from the outer edge of the flat surface 221 and a curved surface 225 smoothly connecting the outer edge of the tapered surface 223 to an inner peripheral surface 224 of the cylindrical fitting part 212 (see Fig. 22A). The valve body abutment part is not limited to the flat surface 221 and may be, for example, an annular projection in contact with the periphery of the fuel injection port 204 of the front end surface 213 of the valve body 205.

The bottom wall part 214 is recessed in a central part 226 on the outside and the plurality of nozzle holes 207 are opened in the recessed central part 226. In the bottom wall part 214, an annular recess 227 around the inner peripheral surface 224 of the cylindrical fitting part 212 is formed in the part (thicker than the central part 226) disposed radially inward of the connection portion with respect to the cylindrical fitting part 212 in the area surrounding the central part 226 on the outside, so that an annular thin-walled part 228 is formed around the inner peripheral surface 224 of the cylindrical fitting part 212 (see Fig. 22A). The annular recess 227 has an arc-shaped cross section to prevent concentration of stress. In addition, although a total of six nozzle holes 207 are formed in the bottom wall part 214 in the embodiment, the invention is not limited to the embodiment and the optimum number of nozzle holes 207 and the optimum hole diameter may be determined according to the necessary fuel injection characteristics.

The nozzle plate 203 configured in this way pushes the cylindrical fitting part 212 so as to narrow the space between the recessed portion 222 inside the bottom wall part 214 and the front end surface 213 of the valve body 205 from the state illustrated in Fig. 22A in which the flat surface 221 first makes contact with the front end surface 213 of the valve body 205 to the state illustrated in Fig. 22B and then the nozzle plate 203 is attached to the valve body 205 by engaging a front end 230a of the arm part 210 described later with the interlocking groove 208 of the valve body 205 (see Fig. 19C). At this time, the annular thin-walled part 228 of the bottom wall part 214 is elastically deformed easily to make it easy to further press-fit the cylindrical fitting part 212 onto the valve body 205. In addition, in the embodiment, as illustrated in Fig. 22C, the cylindrical fitting part 212 can be further press-fitted (moved) onto the front end side of the valve body 205 by the amount of the space between the recessed portion 222 inside the bottom wall part 214 and the front end surface 213 of the valve body 205 (see Fig. 22B). Accordingly, the force caused by the elastic deformation of the annular thin-walled part 228 of the bottom wall part 214 is maintained even when the engagement state changes according to the manufacturing error of the nozzle plate 203 and the valve body 205, the assembling error of the nozzle plate 203 and the valve body 205, and the difference in the linear expansion coefficient between the nozzle plate 203 and the valve body 205.

The arm part 210 includes an arm part main body 230 having the front end 230a engaging with the interlocking groove 208 of the valve body 205, a projection 231 formed on an inner surface 230c of the arm part main body 230 facing a front end side outer peripheral surface 211b of the valve body 205 at a rear end 230b of the arm part main body 230, and arm part main body supporting portions 232 elastically supporting the arm part main body 230 with respect to the cylindrical fitting part 212.

The contour of the arm part main body 230 is formed substantially by a pair of first axial direction grooves 233 and 233, a pair of second axial direction grooves 234 and 234, and a circumferential direction groove 235 formed in the cylindrical fitting part 212. The pair of first axial direction grooves 233 and 233 are formed along the central axis 220 (along the bus line) of the cylindrical fitting part 212 from one end 237 of the cylindrical fitting part 212 so as to be spaced apart in the circumferential direction of the cylindrical fitting part 112. The pair of second axial direction grooves 234 are grooves like long holes disposed in the cylindrical fitting part 212 so as to be away from the first axial direction grooves 233 along extension lines (extension lines along the central axis 220) of the first axial direction grooves 233 so as to face the pair of first axial direction grooves 233 and 233. If the end parts of the second axial direction grooves 234 and 234 close to the first axial direction grooves 233 and 233 are assumed to be one end sides of the second axial direction grooves 234 and 234 and the end parts of the second axial direction grooves 234 and 234 away from the first axial direction grooves 233 and 233 are assumed to be the other end sides of the second axial direction grooves 234 and 234, the other end sides of the pair of second axial direction grooves 234 and 234 are connected to each other by the circumferential direction groove 235 formed along the circumferential direction of the cylindrical fitting part 212. The pair of first axial direction grooves 233 and 233, the pair of the second axial direction grooves 234 and 234, and the circumferential direction groove 235 penetrate the cylindrical fitting part 212 from an outer peripheral surface 236 to the inner peripheral surface 224. As described above, the arm part main body 230 is separated from the cylindrical fitting part 212 except the parts (the arm part main body supporting portions 232 and 232) by the pair of first axial direction grooves 233 and 233, the pair of second axial direction grooves 234 and 234, and the circumferential direction groove 235 formed in the cylindrical fitting part 212. In addition, if the end part of the arm part main body 230 close to one end (opening end) 237 of the cylindrical fitting part 212 is assumed to be one end (rear end) 230b and the end part of the arm part main body 230 away from the one end (opening end) 237 of the cylindrical fitting part 212 in the direction of the central axis 220 is assumed to be the other end (front end) 230a, the part located substantially in the middle of the part between the one end 230b and the other end 230a is elastically supported by the arm part main body supporting portions 232 and 232. Although the circumferential direction groove 235 is formed orthogonally to the central axis 220 of the cylindrical fitting part 212 in the embodiment, the invention is not limited to the embodiment and the circumferential direction groove 235 may be formed obliquely so that the edge of the cylindrical fitting part 212 close to the outer peripheral surface 236 is closer to the bottom wall part 214 than the edge of the cylindrical fitting part 212 close to the inner peripheral surface 224. The arm part main body 230 is substantially rectangular seen from the side of the nozzle plate 203, as illustrated in Figs. 19B and 21B.

The arm part main body supporting portions 232 and 232 are the remaining portions formed between the pair of first axial direction grooves 233 and 233 and the pair of second axial direction grooves 234 and 234 formed in the cylindrical fitting part 212. The arm part main body supporting portions 232 and 232 connect both ends of the arm part main body 230 (both ends in the width direction along the circumferential direction of the cylindrical fitting part 212) to the cylindrical fitting part 212 and elastically supports the arm part main body 230 with respect to the cylindrical fitting part 212 so that the arm part main body 230 can swing.

The projection 231 is a rectangular projection disposed closer to the one end 237 of the cylindrical fitting part 212 (the one end 125b of the arm part main body 125) than the arm part main body supporting portion 232 so as to make contact with a broad area in the circumferential direction of the valve body 205 when the nozzle plate 203 is press-fitted onto the valve body 205. When the end part of the projection 231 close to the one end 237 of the cylindrical fitting part 212 is assumed to be one end 231a and the end part away from the one end 237 of the cylindrical fitting part 212 in the direction of the central axis 220 is assumed to be the other end 231b, the one end 231a is formed at a position closer (radially inward) to the central axis 220 of the cylindrical fitting part 212 than the other end 231b. The projection 231 of this shape lifts the one end 230b of the arm part main body 230 using the pair of arm part main body supporting portions 232 and 232 as the fulcrum when the cylindrical fitting part 212 of the nozzle plate 203 is press-fitted onto the valve body 205, and puts the other end (front end) 230a of the arm part main body 230 into the interlocking groove 208. At this time, when the other end (front end) 230a of the arm part main body 230 does not engage with the interlocking groove 208 because the other end (front end) 230a snaps onto the front end side outer peripheral surface 211a of the valve body 205 due to manufacturing error of the nozzle plate 203 and the valve body 205 or the like, the cylindrical fitting part 212 is further press-fitted onto the valve body 205 within the space between the recessed portion 222 of the bottom wall part 214 and the front end surface 213 of the valve body 205. As a result, the other end (front end) 230a of the arm part main body 230 surely engages with the interlocking groove 208 of the valve body 205 and the nozzle plate 203 is fixed to the valve body 205 while being retained. The inner peripheral edge of the cylindrical fitting part 212 close to the one end 237 and the one end 231a of the projection 231 are preferably chamfered so that the valve body 205 is easily fitted into the cylindrical fitting part 212. In addition, as illustrated in Fig. 23B, the end part of the front end side large-diameter part 218 close to the interlocking groove 208 may be a chamfered surface 238. The chamfered surface 238 is formed to smoothly guide the movements of the one end 230b of the arm part main body 230 and the projection 231 using an inclined surface so that the valve body 205 is easily fitted into the cylindrical fitting part 212 and the chamfered surface 238 preferably prevents the inner surface 230c of the arm part main body 230 from making contact with the valve body 205.

### (Effect of fifth embodiment)

In the attachment structure of the nozzle plate 203 according to the embodiment, if the cylindrical fitting part 212 of the nozzle plate 203 is press-fitted onto the front end side of the valve body 205, the projection 231 of the arm part 210 puts the front end 230a of the arm part main body 230 into the interlocking groove 208 of the valve body 205. However, when the front end 230a of the arm part main body 230 snaps onto the front end side outer surface 211a of the valve body 205 and does not engage with the interlocking groove 208, the cylindrical fitting part 212 is moved (the cylindrical fitting part 212 is further press-fitted onto the valve body 205) in a direction in which the space between the recessed portion 222 of the bottom wall part 214 of the nozzle plate 203 and the front end surface 213 of the valve body 205 is narrowed, the front end 230a of the arm part main body 230 surely engages with the interlocking groove 208, the nozzle plate 203 can be surely fixed to the valve body 205 while being retained. Accordingly, in the attachment structure of the nozzle plate 203 according to the embodiment, it is possible to reduce the manufacturing man-hours and manufacturing cost of the fuel injection device 201 as compared with the conventional example in which the nozzle plate 1103 of metal is fixed to the front end of the valve body 1102 of metal by welding (see Fig. 29). In addition, in the attachment structure of the nozzle plate 203 according to the embodiment, a failure (the nozzle hole 1104 is blocked by welding spatter) does not occur unlike the conventional example in which the nozzle plate 1103 of metal is fixed to the front end of the valve body 1102 of metal by welding (see Fig. 29) and all nozzle holes 207 surely achieve the function of atomizing fuel.

Although Figs. 19A and 21A illustrate an aspect in which the pair of arm parts 210 are formed along the circumferential direction of the cylindrical fitting part 212, the invention is not limited to the aspect and at least one arm part 210 only needs to be formed in the cylindrical fitting part 212 or three or more arm parts 210 may be formed in the cylindrical fitting part 212.

In addition, in the attachment structure of the nozzle plate 203 according to the embodiment, the front shape of the nozzle plate 203 and the valve body 205 is not limited to a circle and may be a polygon such as a hexagon, D-shape, ellipse, or the like.

### [Sixth embodiment]

An attachment structure of the nozzle plate 203 according to a sixth embodiment will be described below.

### (Attachment structure of nozzle plate)

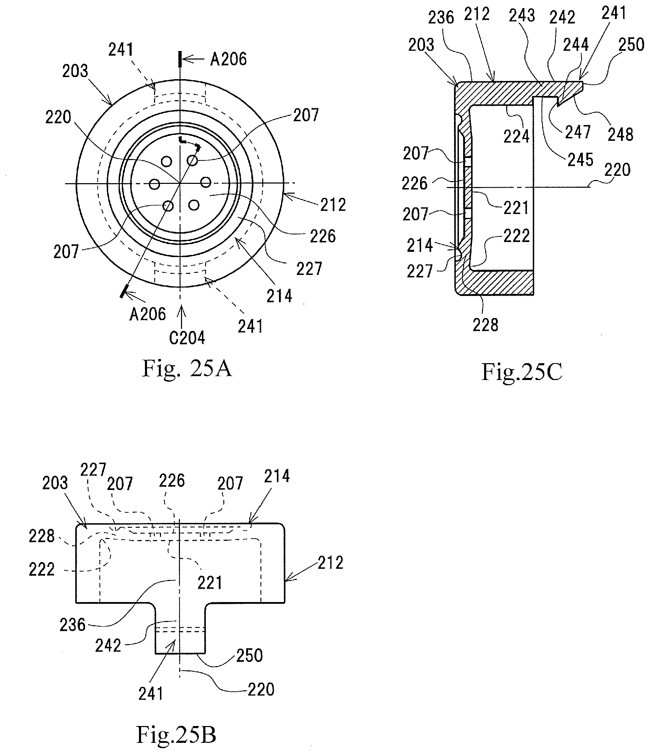

Figs. 24 and 25 illustrate the attachment structure of the nozzle plate 203 according to the sixth embodiment of the invention. Fig. 24 illustrates the front end side of the fuel injection device 201 according to the sixth embodiment of the invention. Fig. 25 illustrates the nozzle plate 203 according to the sixth embodiment of the invention. In the description of the attachment structure of the nozzle plate 203 according to the embodiment, the duplicate description as in the nozzle plate 203 according to the fifth embodiment is omitted.

As illustrated in Figs. 24 and 25, the nozzle plate 203 is a bottomed cylindrical body integrally having the cylindrical fitting part 212 to be pressure-fitted onto the front end side outer peripheral surface 211a of the valve body 205, the bottom wall part 214 formed so as to block one end side of the cylindrical fitting part 212, the bottom wall part 214 abutting against the front end surface 213 of the valve body 205, and a pair of arm parts 241 formed on the other end side of the cylindrical fitting part 212, the pair of arm part 241 snapping onto the interlocking projection 240 of the valve body 205. The nozzle plate 203 according to the embodiment is made of synthetic resin as in the nozzle plate 203 according to the fifth embodiment.

The cylindrical fitting part 212 is cylindrical and has an inner diameter slightly smaller than the outer diameter of the valve body 205 so as to be interference-fitted onto the front end side of the valve body 205. The cylindrical fitting part 212 has one end side blocked by the bottom wall part 214 and the other end side opened so as to receive the front end side of the valve body 205.

The bottom wall part 214 is provided with the flat surface (valve body abutment part) 221 that first makes contact with the front end surface 213 of the valve body 205 when the cylindrical fitting part 212 is press-fitted onto the front end side of the valve body 205 in the central part of the inside (the side facing the front end surface 213 of the valve body 205). The flat surface 221 has the plurality of nozzle holes 207 and makes contact with the periphery of the fuel injection port 204 of the valve body 205. The bottom wall part 214 has the recessed portion 222 (which is recessed from the flat surface 221) radially inward of the connection portion with the cylindrical fitting part 212 to the outer edge of the flat surface 221. The recessed portion 222 is formed inside the bottom wall part 214 so that space is generated with respect to the front end surface 213 of the valve body 205 in the state in which the flat surface 221 first makes contact with the front end surface 213 of the valve body 205. The recessed portion 222 is formed by the tapered surface 223 extending radially outward from the outer edge of the flat surface 221 and the curved surface 225 smoothly connecting the outer edge of the tapered surface 223 to the inner peripheral surface 224 of the cylindrical fitting part 212 (see Fig. 22A). The valve body abutment part is not limited to the flat surface 221 and may be, for example, an annular projection in contact with the periphery of the fuel injection port 204 of the front end surface 213 of the valve body 205.

The bottom wall part 214 is recessed in a central part 226 on the outside and the plurality of nozzle holes 207 are opened in the recessed central part 226. In the bottom wall part 214, the annular recess 227 around the inner peripheral surface 224 of the cylindrical fitting part 212 is formed in the part (thicker than the central part 226) disposed radially inward of the connection portion with respect to the cylindrical fitting part 212 in the area surrounding the central part 226 on the outside, so that the annular thin-walled part 228 is formed around the inner peripheral surface 224 of the cylindrical fitting part 212 (see Fig. 22A). The annular recess 227 has an arc-shaped cross section to prevent concentration of stress. In addition, although a total of six nozzle holes 207 are formed in the bottom wall part 214 in the embodiment, the invention is not limited to the embodiment and the optimum number of nozzle holes 207 and the optimum hole diameter may be determined according to the necessary fuel injection characteristics.

The nozzle plate 203 configured in this way pushes the cylindrical fitting part 212 so as to narrow the space between the recessed portion 222 in the bottom wall part 214 and the front end surface 213 of the valve body 205 from the state illustrated in Fig. 22A in which the flat surface 221 first makes contact with the front end surface 213 of the valve body 205 to the state illustrated in Fig. 22B and then the nozzle plate 203 is attached to the valve body 205 by engaging a hook 244 of the arm part 241 with a side surface 246 of the interlocking projection 240 of the valve body 205. At this time, the bottom wall part 214 is elastically deformed easily in the annular thin-walled part 228 to make it easy to further press-fit the cylindrical fitting part 212 onto the valve body 205. In addition, in the embodiment, as illustrated in Fig. 22C, the cylindrical fitting part 212 can be further press-fitted (moved) onto the front end side of the valve body 205 by the amount of the space between the recessed portion 222 inside the bottom wall part 214 and the front end surface 213 of the valve body 205 (see Fig. 22B). Accordingly, the force caused by the elastic deformation of the annular thin-walled part 228 of the bottom wall part 214 is maintained even when the engagement state changes according to the manufacturing error of the nozzle plate 203 and the valve body 205, the assembling error of the nozzle plate 203 and the valve body 205, and the difference in the linear expansion coefficient between the nozzle plate 203 and the valve body 205.

The pair of arm parts 241 is formed so as to project from the opening end (one end) 237 of the cylindrical fitting part 212 along the bus line of the cylindrical fitting part 212 and the pair of arm parts 241 is formed at intervals of 180 degrees in the circumferential direction of the opening end 237 of the cylindrical fitting part 212. The arm part 241 is rectangular seen from the side of the nozzle plate 203 (seen in the direction of arrow C203 in Fig. 24A and the direction of arrow C204 in Fig. 25A) and entirely shaped like substantially a tongue piece. In the state in which the nozzle plate 203 is not yet attached to the valve body 205, the outer surface 242 of the arm part 241 is flush with the outer peripheral surface 236 of the cylindrical fitting part 212 (see Fig. 25C). The arm part 241 includes the spring action portion 243 bent radially outward when the front end side climbs over the interlocking projection 240 of the valve body 205 and the hook 244 formed integrally with the front end side of the spring action portion 243.

An inner surface 245 (surface facing the valve body 205) of the spring action portion 243 of the arm part 241 is placed radially outward of the inner peripheral surface 224 of the cylindrical fitting part 212 so as not to make contact with the interlocking projection 240 of the valve body 205 in the state (particularly, the state illustrated in Figs. 24C and 24D) in which the nozzle plate 203 is attached to the valve body 205. As described above, since the spring action portion 243 of the arm part 241 is thinner than the cylindrical fitting part 212 so as to be relatively elastically deformable as compared with other components.

The hook 244 of the arm part 241 is provided with an abutment surface 247 that snaps onto the side surface 246 of the interlocking projection 240 of the valve body 205. The abutment surface 247 is a flat surface extending radially inward from the inner surface 245 of the spring action portion 243 and makes contact with the side surface 246 of both side surfaces of the interlocking projection 240 away from the front end surface 213 of the valve body 205 (see Fig. 24C and 24D).

In addition, on the front end side of the hook 244 on the front end side of the arm part 241, an engaging guide surface 248 is formed to cause the hook 244 to easily engage with the front end side of the valve body 205 and the hook 244 to easily climb over the interlocking projection 240 of the valve body 205. The engaging guide surface 248 has one end connected to an end part of the abutment surface 247 and the other end connected to a front end surface 250 of the arm part 241. The engaging guide surface 248 is tilted toward the outer surface 242 of the arm part 241 as moving away from the abutment surface 247. The engaging guide surface 248 of this shape makes contact with an edge 251 of the front end of the valve body 205 and slowly bends the spring action portion 243 when the nozzle plate 203 engages with the front end side of the valve body 205. The engaging guide surface 248 makes contact with the edge 252 of the interlocking projection 240 and slowly bends the spring action portion 243 when the hook 244 climbs over the interlocking projection 240. As a result, the assembling of the nozzle plate 203 and the valve body 205 can be performed smoothly and easily.

### (Effect of sixth embodiment)

In the attachment structure of the nozzle plate 203 according to the embodiment, if the cylindrical fitting part 212 of the nozzle plate 203 is press-fitted onto the front end side of the valve body 205, the hook 244 of the arm part 241 climbs over the interlocking projection 240 and then snaps onto the side surface 246 of the interlocking projection 240. When the hook 244 of the arm part 241 cannot climb over the interlocking projection 240 because of manufacturing error or the like of the nozzle plate 203 and the valve body 205, the cylindrical fitting part 212 is moved (the cylindrical fitting part 212 is further press-fitted onto the valve body 205) in a direction in which the space between the recessed portion 222 of the bottom wall part 214 of the nozzle plate 203 and the front end surface 213 of the valve body 205 is narrowed, the hook 244 of the arm part 241 surely snaps onto (engages with) the interlocking projection 240, and the nozzle plate 203 is surely fixed to the valve body 205 while being retained. Accordingly, in the attachment structure of the nozzle plate 203 according to the embodiment, it is possible to reduce the manufacturing man-hours and manufacturing cost of the fuel injection device 201 as compared with the conventional example in which the nozzle plate 1103 of metal is fixed to the front end of the valve body 1102 of metal by welding (see Fig. 29). In addition, in the attachment structure of the nozzle plate 203 according to the embodiment, a failure (the nozzle hole 1104 is blocked by welding spatter) does not occur unlike the conventional example in which the nozzle plate 1103 of metal is fixed to the front end of the valve body 1102 of metal by welding (see Fig. 29) and all nozzle holes 207 surely achieve the function of atomizing fuel.

Although Figs. 24A and 25A illustrate an aspect in which the pair of arm parts 241 are formed along the circumferential direction of the cylindrical fitting part 212, the invention is not limited to the aspect and at least one arm part 241 only needs to be formed in the cylindrical fitting part 212 or three or more arm parts 241 may be formed in the cylindrical fitting part 212.

By chamfering (such as C-chamfering or R-chamfering) the part corresponding to the edge 252 of the interlocking projection 240 illustrated in Figs. 24C and D, when the hook 244 climbs over the interlocking projection 240, the hook 244 makes contact with the chamfered part of the interlocking projection 240 and slowly bends the spring action portion 243. As a result, the assembling of the nozzle plate 203 and the valve body 205 can be performed easily and smoothly.

### [Seventh embodiment]

An attachment structure of the nozzle plate 203 according to a seventh embodiment which is only exemplary will be described below.

### (Attachment structure of nozzle plate)

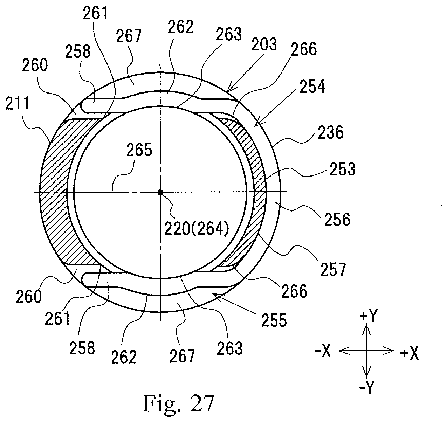

Figs. 26 and 27 illustrate the attachment structure of the nozzle plate 203 according to the seventh embodiment. Fig. 26 illustrates the front end side of the fuel injection device 201 according to the seventh. Fig. 27 is a cross sectional view illustrating the fuel injection device 201 taken along line A208-A208 in Fig. 26B. In the description of the attachment structure of the nozzle plate 203 according to the embodiment, the duplicate description as in the nozzle plate 203 according to the fifth embodiment is omitted.

As illustrated in Figs. 26 and 27, the nozzle plate 203 is a bottomed cylindrical body integrally having the cylindrical fitting part 212 to be pressure-fitted onto the front end side outer peripheral surface 211 of the valve body 205, the bottom wall part 214 formed so as to block one end side of the cylindrical fitting part 212, the bottom wall part 214 abutting against the front end surface 213 of the valve body 205. The nozzle plate 203 according to the embodiment is made of synthetic resin as in the nozzle plate 203 according to the fifth embodiment.

The bottom wall part 214 is provided with the flat surface (valve body abutment part) 221 that first makes contact with the front end surface 213 of the valve body 205 when the cylindrical fitting part 212 is press-fitted onto the front end side of the valve body 205 in the central part of the inside (the side facing the front end surface 213 of the valve body 205). The flat surface 221 has the plurality of nozzle holes 207 and makes contact with the periphery of the fuel injection port 204 of the valve body 205. The bottom wall part 214 has the recessed portion 222 (which is recessed from the flat surface 221) radially inward of the connection portion with the cylindrical fitting part 212 to the outer edge of the flat surface 221. The recessed portion 222 is formed inside the bottom wall part 214 so that space is generated with respect to the front end surface 213 of the valve body 205 in the state in which the flat surface 221 first makes contact with the front end surface 213 of the valve body 205. The recessed portion 222 is formed by the tapered surface 223 extending radially outward from the outer edge of the flat surface 221 and the curved surface 225 smoothly connecting the outer edge of the tapered surface 223 to the inner peripheral surface 224 of the cylindrical fitting part 212 (see Fig. 22A). The valve body abutment part is not limited to the flat surface 221 and may be, for example, an annular projection in contact with the periphery of the fuel injection port 204 of the front end surface 213 of the valve body 205.

The bottom wall part 214 is recessed in a central part 226 on the outside and the plurality of nozzle holes 207 are opened in the recessed central part 226. In the bottom wall part 214, the annular recess 227 around the inner peripheral surface 224 of the cylindrical fitting part 212 is formed in the part (thicker than the central part 226) disposed radially inward of the connection portion with respect to the cylindrical fitting part 212 in the area surrounding the central part 226 on the outside, so that the annular thin-walled part 228 is formed around the inner peripheral surface 224 of the cylindrical fitting part 212 (see Fig. 22A). The annular recess 227 has an arc-shaped cross section to prevent concentration of stress. In addition, although a total of six nozzle holes 207 are formed in the bottom wall part 214 in the embodiment, the invention is not limited to the embodiment and the optimum number of nozzle holes 207 and the optimum hole diameter may be determined according to the necessary fuel injection characteristics.

The nozzle plate 203 configured in this way pushes the cylindrical fitting part 212 so as to narrow the space between the recessed portion 222 in the bottom wall part 214 and the front end surface 213 of the valve body 205 from the state illustrated in Fig. 22A in which the flat surface 221 first makes contact with the front end surface 213 of the valve body 205 to the state illustrated in Fig. 22B and then the nozzle plate 203 is attached to the valve body 205 by interposing a U-ring 254 between a groove wall 268 of an arm part engaging groove portion 260 and the groove wall 270 of an interlocking groove 253. At this time, the bottom wall part 214 is elastically deformed easily in the annular thin-walled part 228 to make it easy to further press-fit the cylindrical fitting part 212 onto the valve body 205. In addition, in the embodiment, as illustrated in Fig. 22C, the cylindrical fitting part 212 can be further press-fitted (moved) onto the front end side of the valve body 205 by the amount of the space between the recessed portion 222 inside the bottom wall part 214 and the front end surface 213 of the valve body 205 (see Fig. 22B). Accordingly, the force caused by the elastic deformation of the annular thin-walled part 228 of the bottom wall part 214 is maintained even when the engagement state changes according to the manufacturing error of the nozzle plate 203 and the valve body 205, the assembling error of the nozzle plate 203 and the valve body 205, and the difference in the linear expansion coefficient between the nozzle plate 203 and the valve body 205.

The cylindrical fitting part 212 is cylindrical and has an inner diameter slightly smaller than the outer diameter of the valve body 205 so as to be press-fitted onto the front end side of the valve body 205. The cylindrical fitting part 212 has one end side blocked by the bottom wall part 214 and the other end side opened so as to receive the front end side of the valve body 205. In the valve body 205 onto which the cylindrical fitting part 212 is to be press-fitted, the interlocking groove 253 is formed in the outer peripheral surface 211 on the front end side. The interlocking groove 253 of the valve body 205 has a rectangular recessed cross section taken along the central axis 220 of the valve body 205 (see Figs. 26C and D).

The cylindrical fitting part 212 is provided with a ring attachment groove 255 to which the U-ring (fixing ring) 254 is attached. The ring attachment groove 255 includes an arc part engaging groove portion 257 with which an arc part 256 of the U-ring 254 engages and the pair of arm part engaging groove portions 260 and 260 with which a pair of arm parts 258 and 258 extending in parallel from both ends of the arc part 256 of the U-ring 254 (see Fig. 27). The depth of the arc part engaging groove portion 257 is almost the same as the wire diameter of the U-ring 254 and the arc part engaging groove portion 257 extends like an arc to the pair of arm part engaging groove portions 260 and 260 around the outer peripheral surface 236 of the cylindrical fitting part 212. The pair of arm part engaging groove portions 260 and 260 is provided with a window 261 in the groove bottom for exposure of the valve body 205. The window 261 formed in the bottom of the arm part engaging groove portion 260 exposes a part of the valve body 205 to the inside of the ring attachment groove 255 so that a valve body pushing portion 262 of the U-ring 254 attached to the arm part engaging groove portion 260 can make contact with a groove bottom 263 of the interlocking groove 253 of the valve body 205. In addition, the pair of arm part engaging groove portions 260 and 260 is formed substantially in parallel with the X-axis when the virtual plane orthogonal to a central axis 264 of the cylindrical fitting part 212 (nozzle plate 203) is assumed to be the X-Y plane as illustrated in Fig. 27, and the pair of arm part engaging groove portions 260 and 260 is formed symmetrically with respect to a center line 265 orthogonal to the central axis 264 of the cylindrical fitting part 212. A connection portion 266 between the arc part engaging groove portion 257 and the arm part engaging groove portion 260 is formed as a smoothly curved surface and functions as a guide surface for inserting the front ends of the arm parts 258 of the U-ring 254 into the arm part engaging groove portions 260 and smoothly guides the front ends of the arm parts 258 of the U-ring 254 into the arm part engaging groove portions 260.

The ring attachment groove 255 of the cylindrical fitting part 212 is formed to have a groove width larger than the wire diameter of the U-ring 254. The ring attachment groove 255 of the cylindrical fitting part 212 is positioned slightly closer to the bottom wall part 214 than the interlocking groove 253 of the valve body 205 in the state in which the nozzle plate 203 is press-fitted onto the front end side of the valve body 205 and the flat surface 221 of the bottom wall part 214 of the nozzle plate 203 makes contact with the front end surface 213 of the valve body 205. In addition, since the cylindrical fitting part 212 is provided with the ring attachment groove 255, a thin-walled U-ring supporting portion 267 having substantially a C-ring shape in plan view is formed in the part close to the opening end 237 of the cylindrical fitting part 212. When the U-ring 254 is attached to the ring attachment groove 255 of the cylindrical fitting part 212 in the state in which the nozzle plate 203 is press-fitted onto the front end side of the valve body 205 and the flat surface 221 of the bottom wall part 214 of the nozzle plate 203 makes contact with the front end surface 213 of the valve body 205, the U-ring 254 is interposed between the groove wall 268 of the arm part engaging groove portion 260 and a groove wall 270 of the interlocking groove 253 while elastically deforming the U-ring supporting portion 267 and U-ring 254 is pushed against the groove wall 270 of the interlocking groove 253 by the elastic force of the U-ring supporting portion 267. However, when the space between the groove wall 268 of the arm part engaging groove portion 260 and the groove wall 270 of the interlocking groove 253 is too small due to manufacturing error and the like in the nozzle plate 203 and the valve body 205, the U-ring 254 is not interposed between the groove wall 268 of the arm part engaging groove portion 260 and the groove wall 270 of the interlocking groove 253. In such a case, when the cylindrical fitting part 212 is moved (further press-fitted onto the valve body 205) in a direction in which the space between the recessed portion 222 of the bottom wall part 214 of the nozzle plate 203 and the front end surface 213 of the valve body 205 is narrowed, the ring attachment groove 255 goes away from the front end surface 213 of the valve body 205, the space between the groove wall 268 of the arm part engaging groove portion 260 and the groove wall 270 of the interlocking groove 253 can be widened, and the U-ring 254 can be easily interposed between the groove wall 268 of the arm part engaging groove portion 260 and the groove wall 270 of the interlocking groove 253.

The U-ring 254 is formed by bending an elastically deformable metal wire having a circular cross section. The U-ring 254 integrally has the arc part 256 and the pair of arm parts 258 and 258 extending substantially in parallel from both ends of the arc part 256. In addition, the arm part 258 of the U-ring 254 has the valve body pushing portion 262 formed like an arc along the groove bottom shape of the interlocking groove 253 of the valve body 205. The U-ring 254 as described above is attached to the ring attachment groove 255 of the cylindrical fitting part 212 and the interlocking groove 253 of the valve body 205 in the state in which the U-ring 254 is elastically deformed to widen the space between the pair of arm parts 258 and 258, elastically pinches the valve body 205 between both ends in the radial direction using the valve body pushing portions 262 and 262 of the pair of arm parts 258 and 258, and is sandwiched between the groove wall 268 of the ring attachment groove 255 of the cylindrical fitting part 212 and the groove wall 270 of the interlocking groove 253 of the valve body 205. This surely fixes the nozzle plate 203 to the front end side of the valve body 205 while being retained.

### (Effect of seventh embodiment)

In the attachment structure of the nozzle plate 203 according to the embodiment, if the cylindrical fitting part 212 of the nozzle plate 203 is fitted onto the front end side of the valve body 205 and the U-ring 254 is attached to the ring attachment groove 255 of the nozzle plate 203, the U-ring 254 is interposed between the groove wall 268 of the arm part engaging groove portion 260 and the groove wall 270 of the interlocking groove 253 while elastically deforming the U-ring supporting portion 267. However, when the space between the groove wall 268 of the arm part engaging groove portion 260 and the groove wall 270 of the interlocking groove 253 is too small to interpose the U-ring 254 between the groove wall 268 of the arm part engaging groove portion 260 and the groove wall 270 of the interlocking groove 253, only if the cylindrical fitting part 212 is moved in a direction in which the space between the recessed portion 222 of the bottom wall part 214 of the nozzle plate 203 and the front end surface 213 of the valve body 203 is narrowed, the space between the groove wall 268 of the arm part engaging groove portion 260 and the groove wall 270 of the interlocking groove 253 is widened, the U-ring 254 can be easily interposed between the groove wall 268 of the arm part engaging groove portion 260 and the groove wall 270 of the interlocking groove 253, and the nozzle plate 203 can be surely fixed to the valve body 205 while being retained. Accordingly, in the attachment structure of the nozzle plate 203 according to the embodiment, it is possible to reduce the manufacturing man-hours and manufacturing cost of the fuel injection device 201 as compared with the conventional example in which the nozzle plate 1103 of metal is fixed to the front end of the valve body 1102 of metal by welding (see Fig. 29). In addition, in the attachment structure of the nozzle plate 203 according to the embodiment, a failure (the nozzle hole 1104 is blocked by welding spatter) does not occur unlike the conventional example in which the nozzle plate 1103 of metal is fixed to the front end of the valve body 1102 of metal by welding (see Fig. 29) and all nozzle holes 207 surely achieve the function of atomizing fuel.

In an aspect of attachment structure of the nozzle plate 203 according to the embodiment, the U-ring 254 is illustrated as a fixing ring and the nozzle plate 203 is fixed to the valve body 205 while being retained by the U-ring 254. However, the invention is not limited to the aspect, a C-ring or E-ring may be used as the fixing ring and the nozzle plate 203 is fixed to the valve body 205 while being retained using a C-ring or E-ring.

### [Modification of fifth to sixth embodiments]

Fig. 26 illustrates a modification of the attachment structure of the nozzle plate 203 according to the fifth to sixth embodiments of the invention, more specifically a modification of the bottom wall part 214 of the nozzle plate 203. As illustrated in Fig. 26, in this modification, in a part radially inward of the connection portion with respect to the cylindrical fitting part 212 in the area surrounding the central part 226 on the outside, the bottom wall part 214 of the nozzle plate 203 has the plurality of annular recesses 227 formed concentrically around the inner peripheral surface 224 of the cylindrical fitting part 212 and the plurality of thin-walled parts 228 formed concentrically around the inner peripheral surface 224 of the cylindrical fitting part 212. Accordingly, the outer peripheral part (the part close to the cylindrical fitting part 212) of the bottom wall part 214 is elastically deformed in multiple stages and this elastic deformation is larger than in the bottom wall part 214 of the nozzle plate 203 according to the fifth to sixth embodiments.

In addition, as illustrated in Fig. 26, when the flat surface 221 (valve body abutment part) first makes contact with the front end surface 213 of the valve body 205, space is generated between the recessed portion 222 of the bottom wall part 214 of the nozzle plate 203 and the front end surface 213 of the valve body 205 and this space is larger than the space between the recessed portion 222 of the bottom wall part 214 of the nozzle plate 203 according to the fifth to sixth embodiments and the front end surface 213 of the valve body 205. The recessed portion 222 includes a tapered surface 271 extending radially outward from the outer edge of the flat surface 221 and an annular groove surface 272 connecting the outer edge of the tapered surface 271 to the inner peripheral surface 224 of the cylindrical fitting part 212. The annular groove surface 272 included in the recessed portion 222 has a depth (depth from the flat surface 221) large enough to prevent the annular groove surface 272 from making contact with the edge 273 on the front end side of the valve body 205 even when deformation is made until the tapered surface 271 makes contact with the front end surface 213 of the valve body 205.

### Reference Signs List

1, 101, 201: fuel injection device
3, 103, 203: nozzle plate (fuel injection device nozzle plate)
4, 104, 204: fuel injection port
5, 105, 205: valve body
7, 107, 207: nozzle hole
8, 240: interlocking projection
10, 110, 210, 241: arm part
12, 112, 212: cylindrical fitting part
13, 113, 213: front end surface
14, 114, 214: bottom wall part
108, 208: interlocking groove

## Claims

1. An attachment structure containing a fuel injection device nozzle plate (3, 103, 203) having a nozzle hole (7, 107, 207) for atomizing and injecting fuel flowing from a fuel injection port (4, 104, 204) of a fuel injection device, wherein:
the fuel injection device nozzle plate (3, 103, 203) includes a cylindrical fitting part (12, 112, 212), to be fitted onto a front end side of a valve body (5, 105, 205) of metal having the fuel injection port (4, 104, 204), and a bottom wall part (14, 114, 214) formed so as to block one end side of the cylindrical fitting part, the bottom wall part to abut against a front end surface of the valve body (5, 105, 205) and having the nozzle hole (7, 107, 207),
the cylindrical fitting part (12, 112, 212) and the bottom wall part (14, 114, 214) of the fuel injection device nozzle plate (3, 103, 203) are made of synthetic resin and formed integrally, **characterised in that**
an arm part (10, 110, 210, 241) of synthetic resin to be fitted to an annular interlocking groove (108, 208) or an annular interlocking projection (8, 240) formed around on an outer periphery of the valve body (5, 105, 205) is formed integrally with the cylindrical fitting part (12, 112, 212), and the cylindrical fitting part is fixed to the valve body when the arm part (10, 110, 210, 241) is fitted to the interlocking groove (108, 208) or the interlocking projection (8, 240) in a state in which the bottom wall part (14, 114, 214) abuts against the front end surface of the valve body (5, 105, 205).

2. The attachment structure according to claim 1 with the valve body (5, 105, 205), the valve body being provided with the outer periphery around which the annular interlocking projection (8, 240) is formed,
the arm part (10, 110, 210, 241) snapping onto the interlocking projection is formed integrally with another end side of the cylindrical fitting part (12, 112, 212), and
the arm part includes a spring action portion (24, 243) used while being elastically deformed and a hook (25, 244) formed integrally with a front end side of the spring action portion, the hook (25, 244) being pushed against the interlocking projection (8, 240) by an elastic force of the spring action portion (24, 243),
one of the hook and the interlocking projection (8, 240) has an inclined plane in contact with the other of the hook (25, 244) and the interlocking projection (8, 240),
the inclined plane is brought into contact with the other of the hook (25, 244) and the interlocking projection (8, 240) by the elastic force of the spring action portion (24, 243) even when a difference in thermal expansion is generated between the valve body (5, 105, 205) and the fuel injection device nozzle plate (3, 103, 203) to generate an inclined plane component force for pushing the bottom wall part against the front end surface of the valve body (5, 105, 205).

3. The attachment structure according to claim 2,
wherein the spring action portion (24, 243) of the arm part is thinner than the cylindrical fitting part to prevent the spring action portion from making contact with the interlocking projection (8, 240).

4. The attachment structure according to claim 2 or 3,
wherein an engaging guide surface (31, 248) is formed on a front end side of the hook on a front end side of the arm part (10, 110, 210, 241) to cause the hook (25, 244) to easily engage with the front end side of the valve body (5, 105, 205) and the hook (25, 244) to easily climb over the interlocking projection(8, 240).

5. The attachment structure according to claim 1 with the valve body,
the valve body (5, 105, 205) being provided with the outer periphery around which the annular interlocking groove (108, 208) is formed,
the arm part (10, 110, 210, 241) engaging with the interlocking groove (108, 208) of the valve body (5, 105, 205) is formed integrally with the other end side of the cylindrical fitting part,
the arm part (10, 110, 210, 241) includes an arm part main body (125, 230) having a front end side engaging with the interlocking groove (108, 208), a projection (126) formed on an inner surface side of the arm part main body on a rear end side of the arm part main body, the projection (126) being in contact with an outer surface of the valve body, and an arm part main body supporting portion elastically supporting the arm part main body with respect to the cylindrical fitting part, and
when the cylindrical fitting part is press-fitted onto the valve body (5, 105, 205), in the fuel injection device nozzle plate, the projection (126) pushes a front end side of the arm part main body against a groove wall of the interlocking groove (108, 208) by putting the front end side of the arm part main body into the interlocking groove (108, 208) using the arm part main body supporting portion as a fulcrum, to keep abutment between the bottom wall part and the front end surface of the valve body (5, 105, 205) by an elastic force acting on a contact portion between the front end side of the arm part main body and the groove wall of the interlocking groove (108, 208) even when a difference in thermal expansion from the valve body (5, 105, 205) is generated.

6. The attachment structure according to claim 5,
wherein a front end surface of the arm part main body (125, 230) makes contact with an edge of the groove wall in the contact portion,
the front end surface of the arm part main body obliquely makes contact with the edge of the groove wall, and
the bottom wall part is pushed against the valve body (5, 105, 205) by an inclined plane component force generated by the elastic force acting on the contact portion.

7. The attachment structure according to claim 5,
wherein the front end surface of the arm part main body (125, 230) makes contact with an inclined plane of the groove wall in the contact portion and
the bottom wall part is pushed against the valve body (5, 105, 205) by an inclined plane component force generated by the elastic force acting on the contact portion.

8. The attachment structure according to any one of claims 5 to 7,
wherein the arm part main body (125, 230) is formed by a pair of first axial direction grooves (233) extending formed in a direction along a central axis of the cylindrical fitting part (12, 112, 212) from the other end of the cylindrical fitting part, a pair of second axial direction grooves (234) formed in the cylindrical fitting part spaced apart from the pair of first axial direction grooves (233) in the direction along the central axis, and a circumferential direction groove (235) connecting end portions of the pair of second axial direction grooves (234) along the circumferential direction of the cylindrical fitting part, the end portions being away from the pair of first axial direction grooves (233),
the arm part main body supporting portion is a remaining portion formed between the pair of first axial direction grooves (233) and the pair of second axial direction grooves (234),
the projection (126) is disposed closer to the other end side of the cylindrical fitting part than the arm part main body supporting portion (125, 230), and
the pair of first axial direction grooves (233), the pair of second axial direction grooves (234), and the circumferential direction groove (235)penetrate from the outer peripheral surface to an inner peripheral surface of the cylindrical fitting part.

9. The attachment structure according to claim 1 with the valve body (5, 105, 205),
wherein the bottom wall part (214) includes a valve body abutment part (214) to abut against the front end surface (213) of the valve body and a recessed portion (222) that defines a space with respect to the front end surface of the valve body when the valve body abutment part (221) initially contacts the front end surface (213) of the valve body, the defined space being narrowed when the nozzle plate is attached to the valve body (5, 105, 205) by fitting the arm part (10, 110, 210, 241) to the annular interlocking groove (108, 208) or annular interlocking projection (8, 240).

10. The attachment structure according to claim 9,
wherein the bottom wall part has an annular thin-walled part (228) formed radially inward of a connection portion with respect to the cylindrical fitting part (12, 112, 212), the annular thin-walled part (228) being formed around the inner peripheral surface of the cylindrical fitting part.

11. The attachment structure according to claim 9,
wherein the bottom wall part has a plurality of annular thin-walled parts (228) formed radially inward of a connection portion with respect to the cylindrical fitting part (12, 112, 212), the annular thin-walled parts being formed concentrically around the inner peripheral surface of the cylindrical fitting part.

## Patentansprüche

1. Befestigungsstruktur, die eine Kraftstoffeinspritzvorrichtungsdüsenplatte (3, 103, 203) enthält, die eine Düsenbohrung (7, 107, 207) zum Zerstäuben und Einspritzen von Kraftstoff aufweist, der aus einer Kraftstoffeinspritzöffnung (4, 104, 204) einer Kraftstoffeinspritzvorrichtung strömt, wobei:
die Kraftstoffeinspritzvorrichtungsdüsenplatte (3, 103, 203) ein zylindrisches Passstück (12, 112, 212), das auf eine Stirnseite eines Ventilkörpers (5, 105, 205) aus Metall aufzusetzen ist, der die Kraftstoffeinspritzöffnung (4, 104, 204) hat, und einen Bodenwandteil (14, 114, 214) aufweist, der so ausgebildet ist, dass er eine Endseite des zylindrischen Passstücks versperrt, wobei der Bodenwandteil an einer Stirnfläche des Ventilkörpers (5, 105, 205) in Anlage gelangt und die Düsenbohrung (7, 107, 207) aufweist,
das zylindrische Passstück (12, 112, 212) und der Bodenwandteil (14, 114, 214) der Kraftstoffeinspritzvorrichtungsdüsenplatte (3, 103, 203) aus Kunstharz bestehen und einstückig ausgebildet sind,
**dadurch gekennzeichnet, dass**
ein Armteil (10, 110, 210, 241) aus Kunstharz, der an einer ringförmigen Verriegelungsnut (108, 208) oder einem ringförmigen Verriegelungsvorsprung (8, 240) anzubringen ist, die bzw. der um einen Außenumfang des Ventilkörpers (5, 105, 205) herum ausgebildet ist, einstückig mit dem zylindrischen Passstück (12, 112, 212) ausgebildet ist, und das zylindrische Passstück am Ventilkörper befestigt ist, wenn der Armteil (10, 110, 210, 241) in einem Zustand, in dem der Bodenwandteil (14, 114, 214) an der Stirnfläche des Ventilkörpers (5, 105, 205) anliegt, an der Verriegelungsnut (108, 208) oder dem Verriegelungsvorsprung (8, 240) angebracht ist.

2. Befestigungsstruktur nach Anspruch 1 mit dem Ventilkörper (5, 105, 205), wobei der Ventilkörper mit dem Außenumfang versehen ist, um den der ringförmige Verriegelungsvorsprung (8, 240) ausgebildet ist,
wobei der an dem Verriegelungsvorsprung verrastende Armteil (10, 110, 210, 241) einstückig mit einer anderen Endseite des zylindrischen Passstücks (12, 112, 212) ausgebildet ist und
der Armteil einen federnden Abschnitt (24, 243), der bei seiner elastischen Verformung verwendet wird, und einen Haken (25, 244) aufweist, der einstückig mit einer Stirnseite des federnden Abschnitts ausgebildet ist, wobei der Haken (25, 244) von einer elastischen Kraft des federnden Abschnitts (24, 243) gegen den Verriegelungsvorsprung (8, 240) geschoben wird,
entweder der Haken oder der Verriegelungsvorsprung (8, 240) eine schiefe Ebene aufweist, die das jeweils andere Element, also den Verriegelungsvorsprung (8, 240) oder den Haken (25, 244), berührt,
die schiefe Ebene von der elastischen Kraft des federnden Abschnitts (24, 243) auch dann in Kontakt mit dem jeweils anderen Element, dem Verriegelungsvorsprung (8, 240) oder dem Haken (25, 244), gebracht wird, wenn eine Differenz in der Wärmeausdehnung zwischen dem Ventilkörper (5, 105, 205) und der Kraftstoffeinspritzvorrichtungsdüsenplatte (3, 103, 203) entsteht, damit eine Komponentenkraft der schiefen Ebene erzeugt wird, mit der der Bodenwandteil gegen die Stirnfläche des Ventilkörpers (5, 105, 205) gedrückt wird.

3. Befestigungsstruktur nach Anspruch 2,
wobei der federnde Abschnitt (24, 243) des Armteils dünner als das zylindrische Passstück ist, um zu verhindern, dass der federnde Abschnitt mit dem Verriegelungsvorsprung (8, 240) in Kontakt gelangt.

4. Befestigungsstruktur nach Anspruch 2 oder 3,
wobei an einer Stirnseite des Hakens an einer Stirnseite des Armteils (10, 110, 210, 241) eine Eingriffsführungsfläche (31, 248) gebildet ist, um zu bewirken, dass der Haken (25, 244) leicht mit der Stirnseite des Ventilkörpers (5, 105, 205) in Eingriff gelangt und der Haken (25, 244) den Verriegelungsvorsprung (8, 240) leicht überwindet.

5. Befestigungsstruktur nach Anspruch 1 mit dem Ventilkörper,
wobei der Ventilkörper (5, 105, 205) mit dem Außenumfang versehen ist, um den die ringförmige Verriegelungsnut (108, 208) ausgebildet ist,
der Armteil (10, 110, 210, 241), der in die Verriegelungsnut (108, 208) des Ventilkörpers (5, 105, 205) eingreift, einstückig mit der anderen Endseite des zylindrischen Passstücks ausgebildet ist,
der Armteil (10, 110, 210, 241) einen Armteilhauptkörper (125, 230), der eine Stirnseite hat, die in die Verriegelungsnut (108, 208) eingreift, einen Vorsprung (126), der an einer rückwärtigen Seite des Armteilhauptkörpers an einer Innenflächenseite des Armteilhauptkörpers ausgebildet ist, wobei der Vorsprung (126) in Kontakt mit einer Außenfläche des Ventilkörpers ist, sowie einen Armteilhauptkörpertragabschnitt aufweist, der den Armteilhauptkörper gegenüber dem zylindrischen Passstück elastisch trägt, und
der Vorsprung (126) dann, wenn in der Kraftstoffeinspritzvorrichtungsdüsenplatte das zylindrische Passstück auf den Ventilkörper (5, 105, 205) aufgepresst wird, eine Stirnseite des Armteilhauptkörpers gegen eine Nutwand der Verriegelungsnut (108, 208) drückt, indem er unter Verwendung des Armteilhauptkörpertragabschnitts als Drehpunkt die Stirnseite des Armteilhauptkörpers in die Verriegelungsnut (108, 208) bringt, um die Anlage zwischen dem Bodenwandteil und der Stirnfläche des Ventilkörpers (5, 105, 205) durch eine elastische Kraft aufrechtzuerhalten, die auch dann auf einen Kontaktabschnitt zwischen der Stirnseite des Armteilhauptkörpers und der Nutwand der Verriegelungsnut (108, 208) wirkt, wenn eine Differenz bei der Wärmeausdehnung vom Ventilkörper (5, 105, 205) aus erzeugt wird.

6. Befestigungsstruktur nach Anspruch 5,
wobei eine Stirnfläche des Armteilhauptkörpers (125, 230) mit einem Rand der Nutwand im Kontaktabschnitt in Berührung gelangt,
die Stirnfläche des Armteilhauptkörpers schräg mit dem Rand der Nutwand in Berührung gelangt und
der Bodenwandteil von einer durch die auf den Kontaktabschnitt wirkende elastische Kraft erzeugten Komponentenkraft einer schiefen Ebene gegen den Ventilkörper (5, 105, 205) gedrückt wird.

7. Befestigungsstruktur nach Anspruch 5,
wobei die Stirnfläche des Armteilhauptkörpers (125, 230) mit einer schiefen Ebene der Nutwand im Kontaktabschnitt in Berührung gelangt und
der Bodenwandteil von einer durch die auf den Kontaktabschnitt wirkende elastische Kraft erzeugten Komponentenkraft der schiefen Ebene gegen den Ventilkörper (5, 105, 205) gedrückt wird.

8. Befestigungsstruktur nach einem der Ansprüche 5 bis 7,
wobei der Armteilhauptkörper (125, 230) durch zwei erste sich in Axialrichtung erstreckende Nuten (233), die in einer Richtung längs einer Mittelachse des zylindrischen Passstücks (12, 112, 212) vom anderen Ende des zylindrischen Passstücks aus gebildet sind, zwei zweite in Axialrichtung verlaufende Nuten (234), die in dem zylindrischen Passstück von den beiden ersten in Axialrichtung verlaufenden Nuten (233) in Richtung längs der Mittelachse beabstandet gebildet sind, und eine in Umfangsrichtung verlaufende Nut (235) gebildet ist, die Endabschnitte der beiden zweiten in Axialrichtung verlaufenden Nuten (234) entlang der Umfangsrichtung des zylindrischen Passstücks verbindet, wobei die Endabschnitte von den beiden ersten in Axialrichtung verlaufenden Nuten (233) entfernt sind,
der Armteilhauptkörpertragabschnitt ein verbleibender Abschnitt ist, der zwischen den beiden ersten in Axialrichtung verlaufenden Nuten (233) und den beiden zweiten in Axialrichtung verlaufenden Nuten (234) gebildet ist,
der Vorsprung (126) näher an der anderen Endseite des zylindrischen Passstücks angeordnet ist als der Armteilhauptkörpertragabschnitt (125, 230) und
die beiden ersten in Axialrichtung verlaufenden Nuten (233), die beiden zweiten in Axialrichtung verlaufenden Nuten (234) und die in Umfangsrichtung verlaufende Nut (235) von der Außenumfangsfläche zu einer Innenumfangsfläche des zylindrischen Passstücks dringen.

9. Befestigungsstruktur nach Anspruch 1 mit dem Ventilkörper (5, 105, 205),
wobei der Bodenwandteil (214) einen Ventilkörperanlageteil (214) zur Anlage an der Stirnfläche (213) des Ventilkörpers und einen ausgesparten Abschnitt (222) aufweist, der einen Raum bezüglich der Stirnfläche des Ventilkörpers definiert, wenn der Ventilkörperanlageteil (221) anfänglich die Stirnfläche (213) des Ventilkörpers berührt, wobei der definierte Raum verschmälert wird, wenn die Düsenplatte am Ventilkörper (5, 105, 205) befestigt wird, indem der Armteil (10, 110, 210, 241) an der ringförmigen Verriegelungsnut (108, 208) oder dem ringförmigen Verriegelungsvorsprung (8, 240) angebracht wird.

10. Befestigungsstruktur nach Anspruch 9,
wobei der Bodenwandteil einen ringförmigen, dünnwandigen Teil (228) aufweist, der bezüglich des zylindrischen Passstücks (12, 112, 212) radial einwärts eines Verbindungsabschnitts ausgebildet ist, wobei der ringförmige, dünnwandige Teil (228) um die Innenumfangsfläche des zylindrischen Passstücks ausgebildet ist.

11. Befestigungsstruktur nach Anspruch 9,
wobei der Bodenwandteil mehrere ringförmige, dünnwandige Teile (228) aufweist, die bezüglich des zylindrischen Passstücks (12, 112, 212) radial einwärts eines Verbindungsabschnitts ausgebildet sind, wobei die ringförmigen, dünnwandigen Teile konzentrisch um die Innenumfangsfläche des zylindrischen Passstücks ausgebildet sind.

## Revendications

1. Structure de raccordement contenant une plaque de buse (3, 103, 203) de dispositif d'injection de carburant présentant un trou de buse (7, 107, 207) pour atomiser et injecter du carburant s'écoulant d'un orifice d'injection de carburant (4, 104, 204) d'un dispositif d'injection de carburant, dans laquelle :
la plaque de buse (3, 103, 203) de dispositif d'injection de carburant comprend une partie de fixation cylindrique (12, 112, 212) à fixer sur un côté d'extrémité avant d'un corps de soupape (5, 105, 205) en métal qui présente l'orifice d'injection de carburant (4, 104, 204), et une partie de paroi inférieure (14, 114, 214) réalisée de manière à bloquer un côté d'extrémité de la partie de fixation cylindrique, la partie de paroi inférieure parvenant en butée contre une surface d'extrémité avant du corps de soupape (5, 105, 205) et présentant le trou de buse (7, 107, 207),
la partie de fixation cylindrique (12, 112, 212) et la partie de paroi inférieure (14, 114, 214) de la plaque de buse (3, 103, 203) de dispositif d'injection de carburant sont en résine synthétique et réalisées d'un seul tenant,
**caractérisée en ce que**
une partie de bras (10, 110, 210, 241) en résine synthétique à fixer sur une rainure de verrouillage annulaire (108, 208) ou une saillie de verrouillage annulaire (8, 240) réalisée autour d'une périphérie extérieure du corps de soupape (5, 105, 205) est réalisée d'un seul tenant avec la partie de fixation cylindrique (12, 112, 212), et la partie de fixation cylindrique est attachée au corps de soupape lorsque la partie de bras (10, 110, 210, 241) est fixée sur la rainure de verrouillage (108, 208) ou la saillie de verrouillage (8, 240) dans un état dans lequel la partie de paroi inférieure (14, 114, 214) est en butée contre la surface d'extrémité avant du corps de soupape (5, 105, 205).

2. Structure de raccordement selon la revendication 1 avec le corps de soupape (5, 105, 205), le corps de soupape étant pourvu de la périphérie extérieure autour de laquelle la saillie de verrouillage annulaire (8, 240) est réalisée,
la partie de bras (10, 110, 210, 241) s'enclenchant sur la saillie de verrouillage étant réalisée d'un seul tenant avec un autre côté d'extrémité de la partie de fixation cylindrique (12, 112, 212), et
la partie de bras présentant un tronçon à effet de ressort (24, 243) utilisé lors de sa déformation élastique, et un crochet (25, 244) réalisé d'un seul tenant avec un côté d'extrémité avant du tronçon à effet de ressort, le crochet (25, 244) étant poussé contre la saillie de verrouillage (8, 240) par une force élastique du tronçon à effet de ressort (24, 243),
le crochet ou la saillie de verrouillage (8, 240) présentant un plan incliné en contact avec l'autre élément, le crochet (25, 244) ou la saillie de verrouillage (8, 240),
le plan incliné étant amené en contact avec l'autre élément, le crochet (25, 244) ou la saillie de verrouillage (8, 240), par la force élastique du tronçon à effet de ressort (24, 243) même lorsqu'une différence de dilatation thermique est générée entre le corps de soupape (5, 105, 205) et la plaque de buse (3, 103, 203) de dispositif d'injection de carburant, afin de générer une force composante du plan incliné pour pousser la partie de paroi inférieure contre la surface d'extrémité avant du corps de soupape (5, 105, 205).

3. Structure de raccordement selon la revendication 2,
dans laquelle le tronçon à effet de ressort (24, 243) de la partie de bras est plus mince que la partie de fixation cylindrique afin d'empêcher le tronçon à effet de ressort de parvenir en contact avec la saillie de verrouillage (8, 240).

4. Structure de raccordement selon la revendication 2 ou 3,
dans laquelle une surface de guidage d'engagement (31, 248) est réalisée sur un côté d'extrémité avant du crochet sur un côté d'extrémité avant de la partie de bras (10, 110, 210, 241) pour amener le crochet (25, 244) à facilement s'engager avec le côté d'extrémité avant du corps de soupape (5, 105, 205) et le crochet (25, 244) à facilement surmonter la saillie de verrouillage (8, 240).

5. Structure de raccordement selon la revendication 1 avec le corps de soupape,
le corps de soupape (5, 105, 205) étant pourvu de la périphérie extérieure autour de laquelle la rainure de verrouillage annulaire (108, 208) est réalisée,
la partie de bras (10, 110, 210, 241) s'engageant avec la rainure de verrouillage (108, 208) du corps de soupape (5, 105, 205) étant réalisée d'un seul tenant avec l'autre côté d'extrémité de la partie de fixation cylindrique,
la partie de bras (10, 110, 210, 241) présentant un corps principal (125, 230) de partie de bras qui présente un côté d'extrémité avant s'engageant avec la rainure de verrouillage (108, 208), une saillie (126) réalisée sur un côté d'extrémité arrière du corps principal de la partie de bras sur un côté de surface intérieure du corps principal de la partie de bras, la saillie (126) étant en contact avec une surface extérieure du corps de soupape, et un tronçon de support du corps principal de la partie de bras supportant le corps principal de la partie de bras de manière élastique par rapport à la partie de fixation cylindrique, et
la saillie (126), lorsque la partie de fixation cylindrique est ajustée de manière serrée sur le corps de soupape (5, 105, 205) dans la plaque de buse de dispositif d'injection de carburant, poussant un côté d'extrémité avant du corps principal de la partie de bras contre une paroi de rainure de la rainure de verrouillage (108, 208) en plaçant le côté d'extrémité avant du corps principal de la partie de bras dans la rainure de verrouillage (108, 208) en utilisant le tronçon de support du corps principal de la partie de bras en tant que point d'appui, afin de maintenir la butée entre la partie de paroi inférieure et la surface d'extrémité avant du corps de soupape (5, 105, 205) par une force élastique agissant sur un tronçon de contact entre le côté d'extrémité avant du corps principal de la partie de bras et la paroi de rainure de la rainure de verrouillage (108, 208), même lors de la génération d'une différence de dilation thermique par rapport au corps de soupape (5, 105, 205).

6. Structure de raccordement selon la revendication 5,
dans laquelle une surface d'extrémité avant du corps principal (125, 230) de la partie de bras parvient en contact avec un bord de la paroi de rainure dans le tronçon de contact,
la surface d'extrémité avant du corps principal de la partie de bras parvient en contact oblique avec le bord de la paroi de rainure, et
la partie de paroi inférieure est poussée contre le corps de soupape (5, 105, 205) par une force composante de plan incliné générée par la force élastique agissant sur le tronçon de contact.

7. Structure de raccordement selon la revendication 5,
dans laquelle une surface d'extrémité avant du corps principal (125, 230) de la partie de bras parvient en contact avec un plan incliné de la paroi de rainure dans le tronçon de contact, et
la partie de paroi inférieure est poussée contre le corps de soupape (5, 105, 205) par une force composante de plan incliné générée par la force élastique agissant sur le tronçon de contact.

8. Structure de raccordement selon l'une des revendications 5 à 7,
dans laquelle le corps principal (125, 230) de la partie de bras est formé par deux premières rainures (233) dans le sens axial qui sont réalisées dans un sens le long d'un axe médian de la partie de fixation cylindrique (12, 112, 212) à partir de l'autre extrémité de la partie de fixation cylindrique, par deux deuxièmes rainures (234) dans le sens axial qui sont réalisées dans la partie de fixation cylindrique espacées des deux premières rainures (233) dans le sens axial dans le sens le long de l'axe médian, et par une rainure (235) dans le sens circonférentiel qui relie des tronçons d'extrémité des deux deuxièmes rainures (234) dans le sens axial le long du sens circonférentiel de la partie de fixation cylindrique, les tronçons d'extrémité étant à distance des deux premières rainures (233) dans le sens axial,
le tronçon de support du corps principal de la partie de bras est un tronçon restant réalisé entre les deux premières rainures (233) dans le sens axial et les deux deuxièmes rainures (234) dans le sens axial,
la saillie (126) est agencée plus près de l'autre côté d'extrémité de la partie de fixation cylindrique que le tronçon de support (125, 230) du corps principal de la partie de bras, et
les deux premières rainures (233) dans le sens axial, les deux deuxièmes rainures (234) dans le sens axial et la rainure (235) dans le sens circonférentiel pénétrent depuis la surface périphérique extérieure vers une surface périphérique intérieure de la partie de fixation cylindrique.

9. Structure de raccordement selon la revendication 1 avec le corps de soupape (5, 105, 205),
dans laquelle la partie de paroi inférieure (224) présente une partie de butée de corps de soupape (214) pour la butée contre la surface d'extrémité avant (213) du corps de soupape, et un tronçon évidé (222) qui définit un espace par rapport à la surface d'extrémité avant du corps de soupape lorsque la partie de butée de corps de soupape (221) contacte initialement la surface d'extrémité avant (213) du corps de soupape, l'espace défini étant rétréci lorsque la plaque de buse est raccordée au corps de soupape (5, 105, 205) en fixant la partie de bras (10, 110, 210, 241) à la rainure de verrouillage annulaire (108, 208) ou la saillie de verrouillage annulaire (8, 240).

10. Structure de raccordement selon la revendication 9,
dans laquelle la partie de paroi inférieure présente une partie annulaire (228) à paroi mince qui est réalisée radialement vers l'intérieur d'un tronçon de connexion par rapport à la partie de fixation cylindrique (12, 112, 212), la partie annulaire (228) à paroi mince étant réalisée autour de la surface périphérique intérieure de la partie de fixation cylindrique.

11. Structure de raccordement selon la revendication 9,
dans laquelle la partie de paroi inférieure présente une pluralité de parties annulaires (228) à paroi mince réalisées radialement vers l'intérieur d'un tronçon de connexion par rapport à la partie de fixation cylindrique (12, 112, 212), les parties annulaires à paroi mince étant réalisées de manière concentrique autour de la surface périphérique intérieure de la partie de fixation cylindrique.
